# EUROPEAN PATENT APPLICATION

(11) **EP 4 752 555 A1**
(43) Date of publication of application: **03.06.2026**
(21) Application number: 24845172.6
(22) Date of filing: 23.05.2024
(51) Int. Cl.: G01N 35/00

(54) **CONTAINER STORAGE MAGAZINE, AUTOMATIC ANALYZER, AND CONTAINER STORAGE METHOD**

(30) Priority: 26.07.2023 JP 2023122016
(71) Applicant: HITACHI HIGH-TECH CORPORATION, Tokyo 105-6409 (JP)
(72) Inventor: MURAMATSU Yoshiki, Tokyo 105-6409 (JP); YAMASHITA Taichiro, Tokyo 105-6409 (JP); OKUSA Takenori, Tokyo 105-6409 (JP)
(74) Representative: Strehl & Partner mbB
(86) International application number: PCT/JP2024/019118
(87) International publication number: WO 2025/022789

(57) **Abstract**

Provided are a container storage in which cylindrical container cases are arranged concentrically in the cylindrical container storage, and reliability is improved by improving rigidity of a rotary disk compared to a structure in the related art, an automatic analyzer, and a container storage method. A container case 8 includes an opening 8c that is capable of inserting and removing a QC specimen container 4, and a lid body 36 that is capable of opening and closing the opening 8c. A holder member 63 constituting a circular ring holder 9 is installed in each of regions formed by dividing a circumference of a rotary disk 16 by an integer N by providing a boundary so as to intersect with the circumference, and is fixed in at least a first position and a second position on an outer circumferential side of the first position in each of the regions.

## Description

### Technical Field

The present invention relates to a container storage suitable for an automatic analyzer that analyzes a biological sample such as blood and urine, and in particular to a container storage that stores a container containing standard sample and quality control sample in individual cases, an automatic analyzer, and a container storage method.

### Background Art

PTL 1 discloses an automatic analyzer "including a reagent dispensing unit that dispenses a reagent from a reagent bottle in which a plurality of reagent containers containing the reagent to be used for analysis of a specimen are arranged in one direction, and a reagent rack in which the reagent bottle is stored, in which the reagent rack includes a lid opening portion that opens a lid corresponding to an upward opening of the reagent container along an arrangement direction of the reagent containers, and a lid fixing portion that fixes the lid outside a path through which the reagent dispensing unit is inserted into the opening".

### Citation List

### Patent Literature

PTL 1: WO2021/171722

### Summary of Invention

### Technical Problem

An automatic analyzer is a device for automatically performing quantitative analysis or qualitative analysis of a specific component contained in a specimen such as blood or urine, and is an essential device in hospitals and medical test facilities. In such an automatic analyzer, it is required to perform more various tests in a shorter time.

Various reagents are used for analysis of a specimen by an automatic analyzer, and in order to obtain a stable analysis result, it is necessary to prevent concentration of the reagent due to evaporation and drying and deterioration in the reagent due to contamination with dust or the like. The reagent used for the analysis is contained in a reagent container having an openable and closable lid, and the lid of the reagent container is opened and closed as necessary.

In many cases, a configuration is known in which a plurality of reagent containers having upward openings are arranged in one direction, and lids corresponding to the respective openings are opened and closed along the arrangement direction of the reagent containers.

The automatic analyzer requires quality control using a standard sample and a quality control sample when necessary, such as when the automatic analyzer is started up each morning or when new reagents are added, which places a burden on an operator. Therefore, there is a demand for an automatic analyzer that can achieve quality control without the operator inputting the standard sample or the quality control sample each time.

Such an automatic analyzer requires a storage for storing the standard sample and the quality control sample. The standard sample and the quality control sample may be collectively referred to as a QC specimen or a QC specimen sample.

There are many types of such QC specimen samples since the QC specimen samples differ for each analysis item. Therefore, it is desirable that the number of specimens stored in the storage is, for example, 100 or more, and it is desirable that the storage can be downsized by efficiently storing the specimens at a high density.

Here, in order to prevent deterioration in a QC specimen, contamination with a foreign matter, changes in concentration due to evaporation, and the like, it is desirable to store the QC specimen in a cooled state during storage, and it is desirable to have a configuration in which a temperature in the storage is uniform and temperature unevenness is small. Hereinafter, the storage may be referred to as a cold storage.

In the configuration disclosed in PTL 1, a cylindrical rack tray that is provided inside a reagent and specimen storage unit and partitions a space in which a reagent bottle and a specimen container are stored and has a configuration in which six inner partition walls are arranged in a radial shape from a columnar portion to a cylindrical portion, and six reagent racks on which a plurality of reagent bottles are mounted can be stored.

However, in the configuration of PTL 1, each of the reagent racks is implemented to be manually attachable to and detachable from the rack tray by an operator. That is, it is clear that there is room for improvement, since the rack tray and the reagent rack are not fixed to each other, and even if a reagent rack is attached, strength and rigidity of the rack tray are not improved.

An object of the invention is to provide a container storage, an automatic analyzer, and a container storage method that have improved reliability by improving rigidity of a rotary disk compared to structures in the related art, in a container storage in which cylindrical container cases are concentrically arranged in a cylindrical container storage.

### Solution to Problem

The invention includes a plurality of methods for solving the above-described problems, and one example thereof includes a container case configured to hold a container that accommodates a liquid; a holder configured to allow a plurality of container cases to be arranged; and a holder holding disk configured to hold a plurality of the holders on a circumference thereof and to be rotatable about a rotation axis. The container case includes an opening portion configured to be capable of inserting and removing the container and a lid portion configured to be capable of opening and closing the opening portion, the holder is installed in each of regions formed by dividing the circumference of the holder holding disk by an integer N by providing a boundary so as to intersect with the circumference, and the holder is fixed in at least a first position and a second position on an outer circumferential side of the first position in each of the regions.

### Advantageous Effects of Invention

According to the invention, rigidity of a rotary disk can be improved compared to a structure in the related art, and thus reliability can be further improved. Problems, configurations, and effects other than those described above will be clarified by description of the following embodiments.

### Brief Description of Drawings

[FIG. 1] FIG. 1 shows a schematic plan view of an automatic analyzer according to an embodiment.
[FIG. 2] FIG. 2 shows a cross-sectional view of a container storage device according to the embodiment taken along a line B-B.
[FIG. 3] FIG. 3 shows a cross-sectional view of the container storage device according to the embodiment taken along a line A-A.
[FIG. 4] FIG. 4 shows four views showing a configuration of a container case and a lid body according to the embodiment.
[FIG. 5] FIG. 5 shows a cross-sectional view showing the configuration of the container case and the lid body according to the embodiment taken along a line C-C.
[FIG. 6] FIG. 6 shows perspective views showing the configuration of the container case and the lid body according to the embodiment.
[FIG. 7] FIG. 7 shows perspective views showing an opening and closing operation of the lid body according to the embodiment.
[FIG. 8] FIG. 8 shows a plan view and a longitudinal cross-sectional view showing a state in which the container cases and the lid bodies according to the embodiment are arranged close to each other in a radial direction of a storage.
[FIG. 9] FIG. 9 shows a cross-sectional view showing an arrangement of the container cases and the lid bodies according to the embodiment taken along a line F-F.
[FIG. 10] FIG. 10 shows a cross-sectional view showing the arrangement of the container cases and the lid bodies according to the embodiment taken along the line F-F, and is a view showing a fully open state of the lid body and an operation of taking out a container.
[FIG. 11] FIG. 11 shows a partial top view showing an arrangement of the container cases and the lid bodies in the storage according to the embodiment.
[FIG. 12] FIG. 12 shows a top view showing an example of the arrangement of the container cases and the lid bodies in the storage according to the embodiment.
[FIG. 13] FIG. 13 shows a cross-sectional view showing a configuration of an encoder according to the embodiment taken along a line D-D.
[FIG. 14] FIG. 14 shows a partially exploded perspective view showing an arrangement and a mounting configuration of a rotary disk, holder members, and the container cases of the storage according to the embodiment.
[FIG. 15] FIG. 15 shows a plan view showing a configuration of the holder member of the storage according to the embodiment.
[FIG. 16] FIG. 16 shows a plan view showing the arrangement and the mounting configuration of the rotary disk, the holder members, and the container cases of the storage according to the embodiment.
[FIG. 17] FIG. 17 shows a cross-sectional view showing a configuration of the storage taken along the line A-A and a flow of cold air according to the embodiment.
[FIG. 18] FIG. 18 shows an exploded perspective view showing the configuration of the storage and the flow of the cold air according to the embodiment.
[FIG. 19] FIG. 19 shows longitudinal cross-sectional views showing the flow of the cold air when taking out the container from the container case in the storage according to the embodiment.
[FIG. 20] FIG. 20 shows a cross-sectional view showing the configuration of the storage taken along the line A-A and the flow of the cold air according to the embodiment.
[FIG. 21] FIG. 21 shows a diagram showing a configuration including a second holder member capable of supporting different container cases according to another embodiment of the invention.

### Description of Embodiments

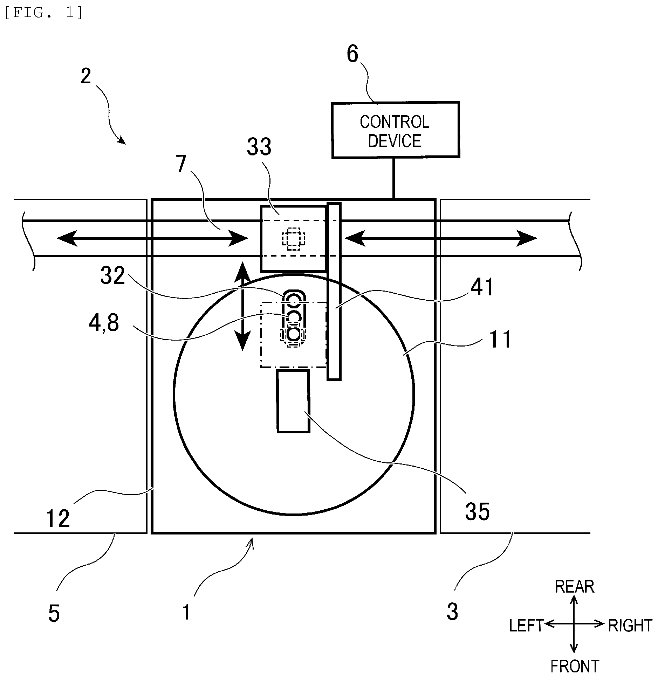

An embodiment of a container storage, an automatic analyzer, and a container storage method of the invention will be described with reference to FIGS. 1 to 21. In the drawings used in the present description, the same or corresponding components are denoted by the same or similar reference signs, and repeated descriptions of these components may be omitted.

First, an overall configuration of an automatic analyzer 2 including a container storage device 1 will be described with reference to FIG. 1. FIG. 1 is a schematic plan view of the automatic analyzer 2.

The automatic analyzer 2 according to the invention shown in FIG. 1 includes the container storage device 1 that stores a QC specimen container 4 to be used for measurement in an analyzer 3, the analyzer 3 that is a device for measuring a physical property of a specimen and needs to ensure analysis accuracy by a QC specimen, and a pretreatment device 5 that performs various pretreatments on a specimen prior to analysis on the specimen in the analyzer 3 or a post-treatment device that performs various post-treatments on the specimen after the analysis on the specimen.

A control device 6 includes, for example, a control computer, a drive circuit of each drive motor, a control circuit of a barcode reader, a storage device of a read barcode, a signal detection circuit by various sensors, a control circuit of a cooling device, and a display circuit of a monitor, and controls various operations of the container storage device 1.

Two or more of each of the analyzer 3, the pretreatment device 5, the post-treatment device, and the container storage device 1 constituting the automatic analyzer 2 may be provided, or may be omitted as necessary, and may be appropriately changed according to a system configuration. Even in such a case, the components are connected to one another by a first conveyance path 7, and can move and receive a specimen container, a rack on which the specimen container is placed, or the like.

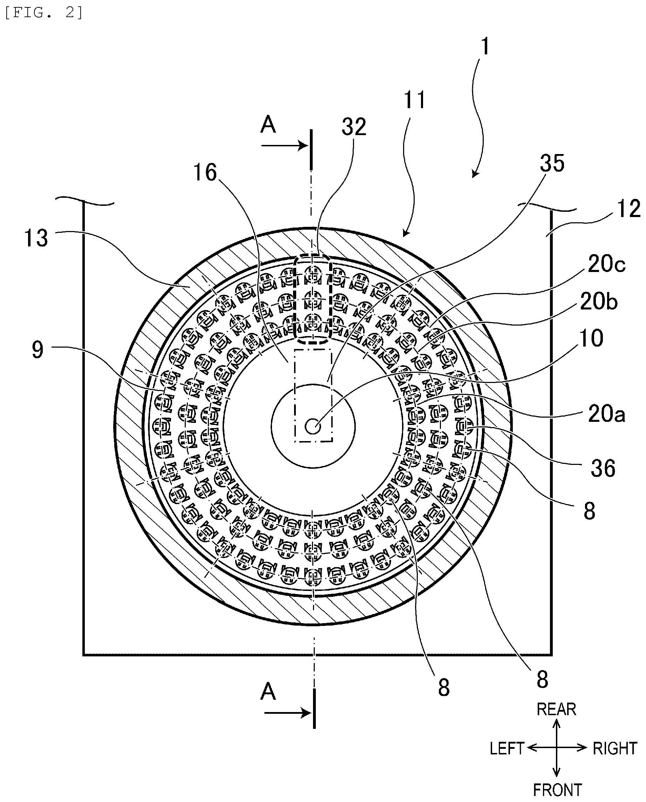

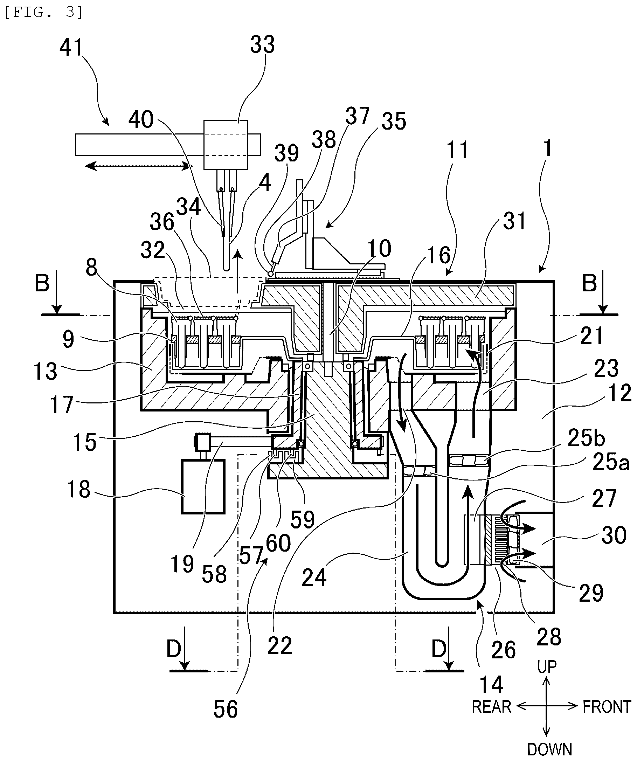

Next, the configuration of the container storage device 1 according to the present embodiment will be described with reference to FIGS. 2, 3, and 1 as appropriate. FIG. 2 is a schematic plan view of the container storage device and is a cross-sectional view taken along a line B-B in FIG. 3. FIG. 3 is a cross-sectional view taken along a line A-A in FIG. 2.

In the present embodiment, an example is shown in which a holder is a circular ring holder 9 in which container cases 8 are arranged and fixed in three concentric circles, and the container cases 8 are concentrically arranged in the circular ring holder 9 with respect to a storage center shaft 10. However, the holder is not limited to a circular ring shape, and may have any shape of a disk shape or a fan shape, and is not limited to these shapes. The container cases 8 do not need to be concentrically held in the holder, and may be arranged in another manner. In the following description, a container may be referred to as a specimen container or a QC specimen container.

In the following description, up, down, left, right, front, and rear directions are based on up, down, left, right, front, and rear directions shown in FIGS. 1 to 3. In the present embodiment, a front-rear direction is a radial direction of a storage 11 along A-A, and is a direction orthogonal to a first conveyance path 7. A left-right direction is a direction parallel to the first conveyance path 7 orthogonal to the A-A direction.

To describe a schematic configuration of the container storage device 1 according to the present embodiment with reference to FIGS. 2 and 3, the container storage device 1 includes a substantially rectangular parallelepiped housing 12, and the substantially cylindrical storage 11 is provided inside the housing 12.

The configuration of the storage 11 will be described with reference to FIGS. 2 and 3. The storage 11 is provided in a cylindrical shape around the storage center shaft 10 oriented in a vertical direction. In order to maintain the inside of the storage 11 at a low temperature, for example, 10°C or lower, a cylindrical surface, an upper surface, and a lower surface of an outer circumference of the storage 11 are covered with a heat insulating member 13 having a low thermal conductivity, and the storage 11 is cooled by a cooling device 14 using, for example, low-temperature air. The heat insulating member 13 accommodates a rotary disk 16 to be rotatable about a rotation axis.

The disk-shaped rotary disk 16 rotatably supported around a support shaft 15 provided coaxially with the storage center shaft 10 is provided inside the storage 11. The rotary disk 16 can be rotated by being connected to a drive motor 18, for example, a stepping motor via a disk drive shaft 17 via a timing belt 19, and can be stopped at a predetermined angle position by a rotary encoder (hereinafter, referred to as an encoder 56) using an angle detection sensor 58. A detailed configuration will be described separately.

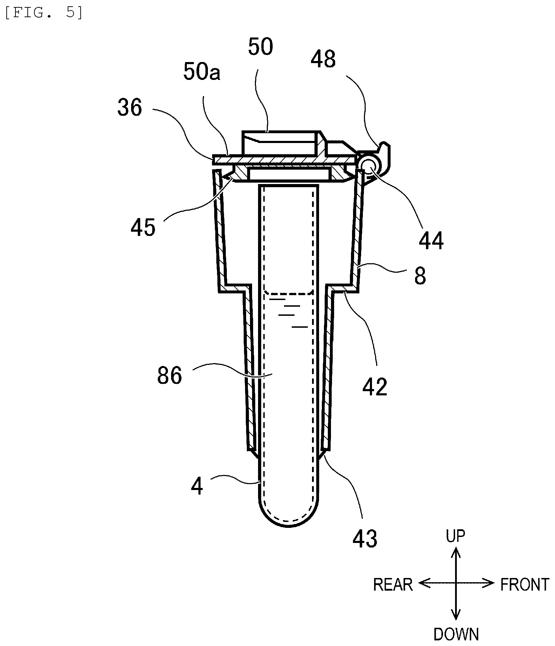

On the rotary disk 16, a plurality of container cases 8 are arranged concentrically and radially around the center axis of the storage 11 via the circular ring holder 9, and the QC specimen container 4 containing a liquid 86 (see FIG. 5 and the like) such as a QC specimen sample is stored in each of the container cases 8. In the present embodiment, the container cases 8 are arranged in a triple concentric circle configuration, that is, along an outer circumference circle 20c, an intermediate circumference circle 20b, and an inner circumference circle 20a.

Each of the container cases 8 is implemented to be fixed to the circular ring holder 9 by, for example, so-called snap fitting using screw fastening or elastic deformation of a resin member.

The circular ring holder 9 is formed of a concentric circle implemented to be rotatable about a rotation axis, and is implemented such that the plurality of container cases 8 can be arranged concentrically in double or more concentric circles. Details of the configuration will be described below.

A fixing disk 21 is provided in a gap between the rotary disk 16 and the heat insulating member 13, and includes an outer circumference cylindrical portion 21a provided concentrically with the rotary disk 16 on an outer circumference of the rotary disk 16 and a disk portion 21b provided on a lower surface of the rotary disk 16.

As shown in FIG. 3, in order to cool the inside of the storage 11, the cooling device 14 is connected to a lower surface of the storage 11.

The cooling device 14 includes a substantially U-shaped cold air duct 24 connected to a bottom surface of the storage 11 with one side covered with the heat insulating member 13 as an intake port 22 for aspirating the air inside the storage 11 in which the QC specimen container 4 is present and the other side as a dispensing port 23, a cold air blowing fan 25a for introducing the air inside the storage 11 into the cold air duct 24 via the intake port 22, a cold air blowing fan 25b for blowing the air cooled in the cold air duct 24 into the storage 11 in which the QC specimen container 4 is present via the dispensing port 23, and a cooling element 26.

For example, a cooling fin 27 provided in contact with a low-temperature side of the cooling element 26 which is a Peltier element generating a temperature difference by applying a voltage is provided on an inner wall of the cold air duct 24 and protrudes into the cold air duct 24, and cools air blown in the cold air duct 24. A heat dissipation fin 28 provided in contact with a high-temperature side of the cooling element 26 is arranged toward the outside of the cold air duct 24, and heat is dissipated to the outside through an exhaust port 30 by a heat dissipation fan 29.

A shutter opening 32 is provided on a rearward radius of a drum upper lid 31 constituting an upper surface of the storage 11.

The shutter opening 32 according to the present embodiment has a substantially rectangular shape, and one side thereof is in the front-rear direction and the other side is shorter than the one side and orthogonal to the one side. A length of one side is such that, in the present embodiment, the container cases 8 positioned on the outer circumference circle 20c and the inner circumference circle 20a of the container cases 8 arranged in a triple concentric circle configuration are exposed in a plan view, and a length of the other side is such that one of the container cases 8 is exposed in a plan view, and an opening dimension is sufficient to allow the QC specimen container 4 to be placed in the container case 8 or taken out from the container case 8 by a container gripping device 33 described later. In the following description, one side of the shutter opening 32 may be referred to as a long side, and the other side may be referred to as a short side.

The shutter opening 32 is provided with a shutter 34 that is opened and closed by a shutter opening and closing mechanism (not shown). To prevent outside air from entering the cooled storage 11 when the shutter 34 is closed, an airtight sealing material (not shown) is provided about the shutter 34, sealing a space between the shutter opening 32 of the storage 11 and the shutter 34.

The rotary disk 16 is rotated and stopped at a position where the center axis of the QC specimen container 4 stored in a predetermined container case 8 provided in the storage 11 coincides with the shutter opening 32, so that the predetermined QC specimen container 4 can be arranged within the range of the shutter opening 32.

A lid opening and closing device 35 is provided adjacent to the shutter opening 32 on the same radius in a direction approaching the storage center shaft 10 of the storage 11. The lid opening and closing device 35 can open and close a lid body 36 by acting on the lid body 36 provided on the upper surface of the container case 8 stored in the storage 11 via the shutter opening 32 in an open state.

In the lid opening and closing device 35, a cylindrical support rod portion 38 extends toward a rear lower side at the lower end of an opening and closing arm 37 movable in the front-rear direction and an up-down direction, and an opening and closing hook 39 extending symmetrically in the left-right direction is provided at a lower end of the support rod portion 38. The support rod portion 38 and the opening and closing hook 39 form a substantially inverted T shape in front view or rear view.

The container gripping device 33 (gripper) includes, at its lower end, an opening and closing claw (gripping claw) 40 capable of gripping and releasing the QC specimen container 4 held in the container case 8, and is supported by a second conveyance path 41 to be movable in the front-rear direction and the up-down direction. In a state in which the lid body 36 is opened, the container gripping device 33 can take out the QC specimen container 4 to the outside of the storage 11, move to the first conveyance path 7, and place the QC specimen container 4 on a container rack (not shown) or the like on the first conveyance path 7.

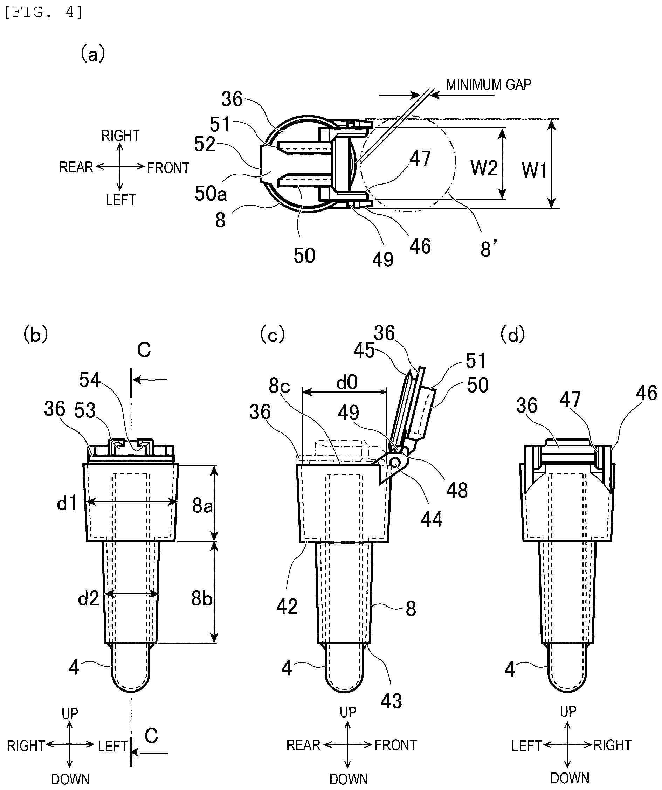

The configuration of the container case 8 and the lid body 36 provided on the upper surface of the container case 8 and an opening operation of the lid body 36 performed by the lid opening and closing device 35 will be described with reference to FIGS. 4 to 7. A container lid body may be simply referred to as a lid body.

FIG. 4 is a four-sided view showing the configuration of the container case 8 provided with the lid body 36, where (a) of FIG. 4 is a top view, (b) of FIG. 4 is a rear view, and (c) of FIG. 4 is a side view showing the lid body 36 in a fully open state, and a one-dot chain line shows the lid body 36 in a fully closed state. (d) of FIG. 4 is a front view.

FIG. 5 is a cross-sectional view taken along a line C-C of the container case 8 and the lid body 36, showing the lid body 36 in the fully closed state.

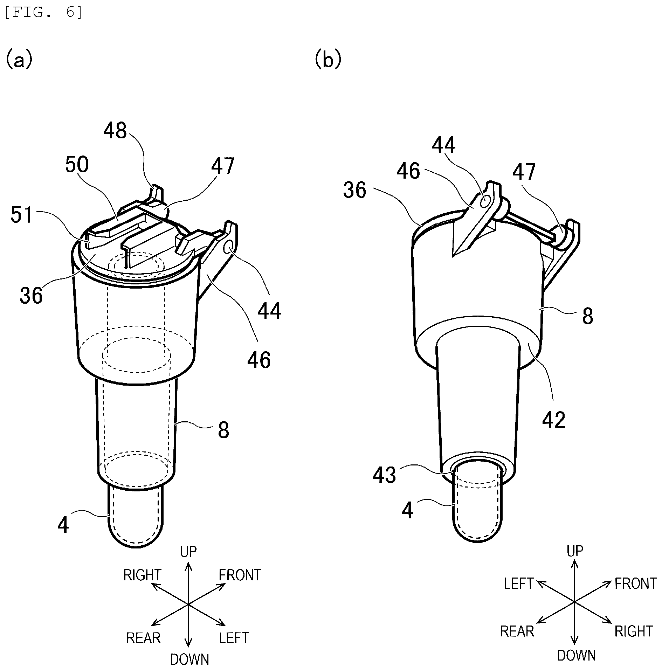

FIG. 6 is a perspective view of the container case 8 and the lid body 36, showing the lid body 36 in the fully closed state.

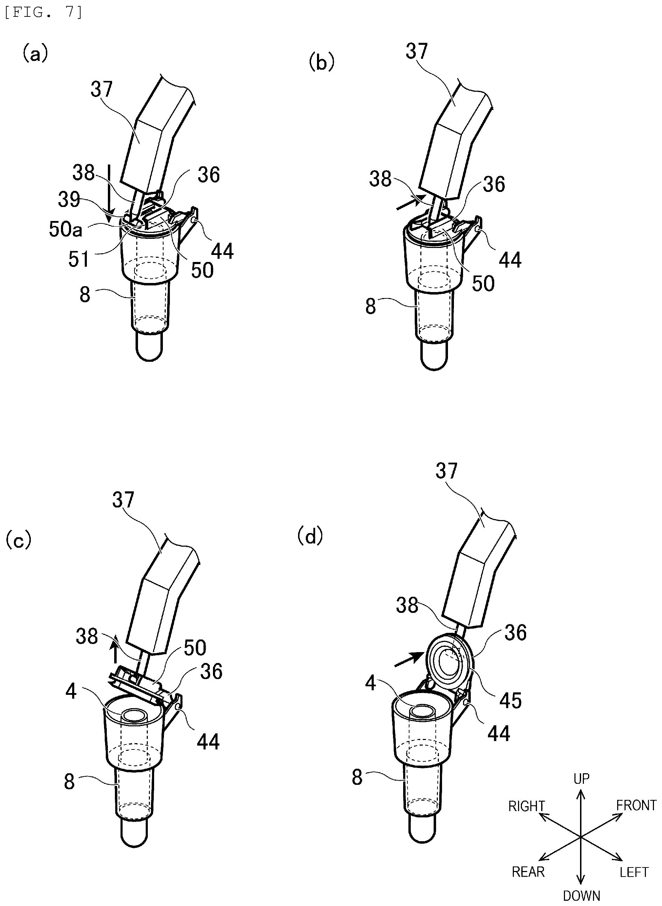

FIG. 7 is a perspective view of an operation of opening the lid body 36 from a closed state by an action of the opening and closing hook 39 of the lid opening and closing device 35 as viewed from a rear upper side. In FIGS. 4 to 7, the QC specimen container 4 is set in the container case 8.

The container case 8 has a substantially stepped cylindrical shape provided with an opening 8c having a diameter d0 implemented to allow insertion and take-out of the QC specimen container 4 gripped by the container gripping device 33 on the upper surface thereof. Further, an upper portion of the container case 8 is a first tubular portion 8a having a first diameter d1 with a large diameter, and a lower portion in the vertical direction than the first tubular portion 8a is a second tubular portion 8b concentric with the first tubular portion 8a and having a second diameter d2 with a smaller diameter than the first tubular portion 8a. A stepped portion 42 is formed between the first tubular portion 8a and the second tubular portion 8b, and is placed on a circular ring holder 9 at the stepped portion 42.

In the first tubular portion 8a, the gripping claw 40 of the container gripping device 33 is inserted into a cylindrical gap between an outer circumference of the QC specimen container 4 held inside and an inner circumference of the first tubular portion 8a, and the gripping claw 40 is opened and closed to grip and release the QC specimen container 4. Therefore, when the gripping claw 40 is lowered in an open state in order to grip the QC specimen container 4, an appropriate gap is required so that the gripping claw 40 does not come into contact with an upper end of the QC specimen container 4 and the opening 8c on the upper surface of the container case 8. Therefore, there is a limit to reducing the first diameter d1.

A sealing member 43 having a circular ring shape formed of a flexible material such as rubber and including an inner circumference hole having a diameter slightly smaller than an outer circumference cylindrical surface of the QC specimen container 4 is provided on a case bottom surface which is a lowermost surface of the second tubular portion 8b. By the sealing member 43, when the QC specimen container 4 is inserted and held in the container case 8, a space between the outer circumference cylindrical surface of the QC specimen container 4 is kept airtight, and the lower end of the QC specimen container 4 is exposed below the circular ring holder 9.

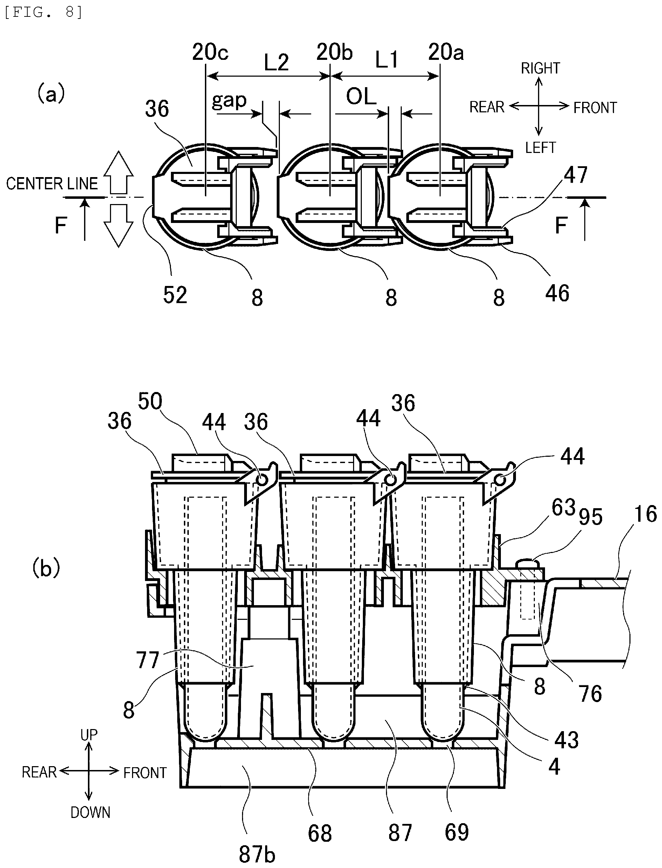

A holding hole 69 that supports the lower end of the QC specimen container 4 is provided at a position corresponding to each QC specimen container 4 in a bottom disk portion 68 (see FIG. 8 and the like to be described later) of the rotary disk 16, and cooperates with the sealing member 43 having a circular ring shape to vertically hold the QC specimen container 4 in a state of not being in contact with the inner circumference of the container case 8.

The container case 8 is provided with a lid body support shaft 44 at an outer edge of an opening 8c on the upper surface of the container case 8, and the lid body 36 that opens and closes the opening 8c is pivotally supported around the lid body support shaft 44 to be openable and closable. When the lid body 36 is closed, a disk-shaped sealing material 45 provided on the lower surface of the lid body 36 comes into contact with the inside of the opening 8c of the container case 8 to seal the inside of the container case 8.

In the lid body support shaft 44, a case hinge portion 46 obtained by extending a part of the container case 8 forward and a lid hinge portion 47 obtained by extending a part of the lid body 36 forward are provided between adjacent container cases 8' so as not to interfere with the adjacent container cases 8 when the container case 8 having the same shape is closely arranged and in front of the container case 8. That is, the gap between adjacent container cases 8' is set to a narrowest minimum gap on the center axis, and case intervals can be arranged close to each other to, for example, about 1 mm.

On the other hand, since the container case 8 has a cylindrical shape and a distance therebetween increases as a distance from the center axis increases, it is preferable that a maximum width W1 of the case hinge portion 46 is slightly smaller than a maximum diameter of the upper end of the container case 8 and is provided in a range not interfering with a projection surface of the adjacent container case 8' in a plan view. A maximum width W2 of the lid hinge portion 47 is slightly smaller than an inner width of the case hinge portion 46 to provide a gap in the left-right direction, and the lid body 36 is implemented to be openable and closable around the lid body support shaft 44.

An example of a preferred position of the lid body support shaft 44 will be described with reference to (c) of FIG. 4. When the lid body 36 is fully closed, the lid body 36 is provided with the sealing material 45 that enters the container case 8 from the opening 8c on the upper surface of the container case 8 and abuts against the inner circumference of the container case 8 to maintain airtightness. When the lid body 36 is fully opened, a fully open angle is desirably set to 90 degrees or more, for example, about 100° to 105° so that the sealing material 45 is positioned outside the opening 8c on the upper surface of the container case 8 in a plan view.

By opening the opening 8c on the upper surface of the container case 8 in this way, it is possible to prevent the gripping claw 40 of the container gripping device 33 from interfering with the insertion into the container case 8 to grip the QC specimen container 4, which is preferable because reliability of an attachment and detachment operation of the QC specimen container 4 can be improved.

Here, in order to set the fully open angle of the lid body 36 to, for example, about 100° to 105°, if a part of a frontmost portion of the case hinge portion 46 of the container case 8 is formed into a shape protruding upward to form a locking surface 48, a part of the lid body 36 is formed into a locking protrusion 49 protruding outward in the left-right direction, and the locking protrusion 49 abuts against the locking surface 48 when the lid body is fully opened, there is an effect of accurately maintaining the fully open state.

A hook receiving portion 50 for opening and closing the lid body 36 by an action of the opening and closing hook 39 is provided on the upper surface of the substantially disk-shaped lid body 36. As shown in (a) of FIG. 4, the hook receiving portion 50 has a substantially U-shape in a plan view, and has a shape in which a hook receiving portion end portion 51 on a rear surface is opened.

As shown in (b) of FIG. 4, in a rear view, the hook receiving portion end portion 51 forms an inverted T-shaped lid groove 53, and has a shape in which the inverted T-shaped support rod portion 38 and the opening and closing hook 39 can be inserted or removed. The shape of the lid groove 53 is symmetrical on the left and right sides of the hook receiving portion 50 with the support rod portion 38 in between. The lid groove 53 may be referred to as a recess. A rear end portion of the upper surface of the lid body 36 may form a lid convex portion 52 parallel to the hook receiving portion end portion 51. The rear end portion of the upper surface of the lid body 36 behind the hook receiving portion end portion 51 is a flat region 50a.

From the region 50a, the support rod portion 38 is horizontally moved forward and inserted into the lid groove 53 in the front-rear direction provided on the upper surface of the hook receiving portion 50 via the hook receiving portion end portion 51, and the opening and closing hook 39 is inserted between the upper surface of the lid body 36 and a lid groove upper surface 54 parallel to the lid body upper surface. When the support rod portion 38 is pressed downward, the lid body 36 is closed, and when the support rod portion 38 is raised in a state in which the opening and closing hook 39 is positioned below the lid groove upper surface 54, the lid body 36 is opened.

The hook receiving portion 50 has a shape protruding from the upper surface of the lid body 36. The shape of the hook receiving portion 50 is provided in a range that does not interfere with the lid body 36 or the hook receiving portion 50 of the adjacent container case 8' when the lid body 36 is fully opened.

A series of opening operations of the lid body 36 with reference to FIG. 7 is described.
(a) The opening and closing arm 37 is moved horizontally and lowered in the vertical direction, and the opening and closing hook 39 comes into contact with the upper surface of the lid body 36 in the region 50a rearward of the hook receiving portion end portion 51.
(b) The opening and closing arm 37 is horizontally moved in a direction approaching the lid body support shaft 44. The opening and closing hook 39 is inserted into the hook receiving portion 50.
(c) The opening and closing arm 37 is raised. The lid body 36 is opened via the hook receiving portion 50 by raising the opening and closing hook 39.
(d) The opening and closing arm 37 is horizontally moved toward the direction of the lid body support shaft 44 to fully open the lid body 36.

By the above operation, the lid body 36 can be changed from a closed state to the fully open state.

Next, a positional relationship between the container cases 8 when the container cases 8 are arranged in a straight line on the center line on the radius of the triple concentric circle will be described with reference to FIGS. 8 to 10.

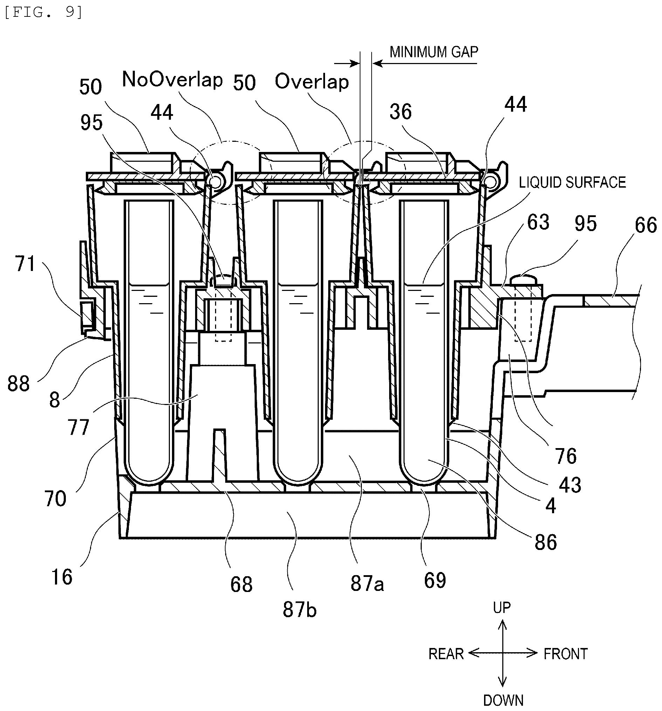

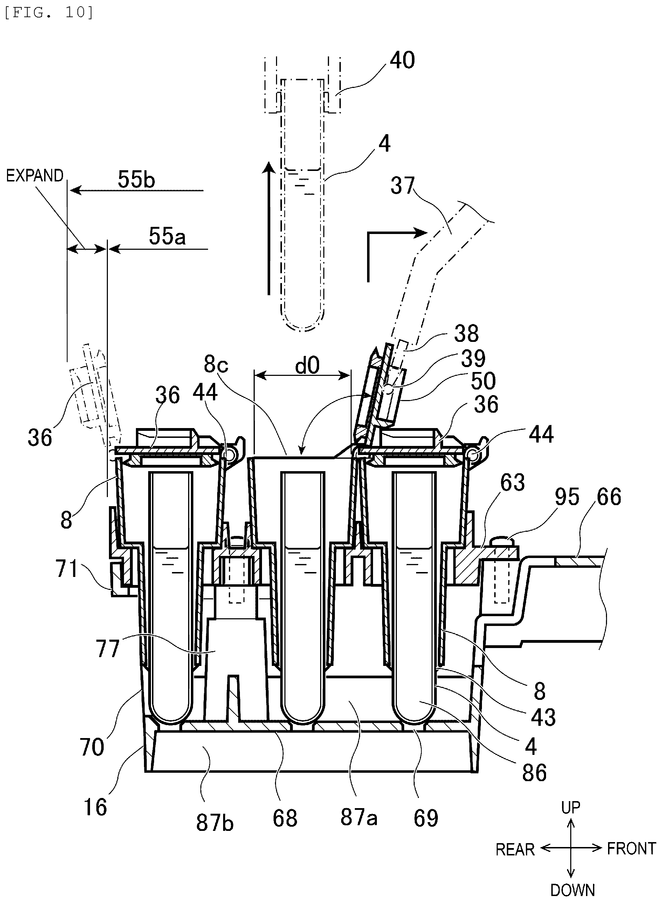

(a) of FIG. 8 is a plan view, (b) of FIG. 8 is a left side view, and the circular ring holder 9 and the rotary disk 16 other than the container case 8 are shown in a cross section. FIG. 9 is a longitudinal cross-sectional view in which the container case 8 is further shown in cross section from (b) of FIG. 8. The front is close to the center axis of the rotary disk 16, and the rear is close to the outer circumference of the rotary disk 16. FIG. 10 is a longitudinal cross-sectional view similar to FIG. 9, in which the lid body 36 of the container case 8 arranged in the intermediate circumference circle 20b is in the fully open state.

FIG. 8 and the like show a state in which the distance between the centers of the container case 8 arranged on the innermost inner circumference circle 20a and the container case 8 arranged on the intermediate circumference circle 20b is a minimum value L1, and for example, the container case 8 is arranged with a "minimum gap" of about 1 mm.

In this case, the lid body support shaft 44 of the container case 8 arranged in the intermediate circumference circle 20b or the lid hinge portion 47 and the case hinge portion 46 constituting the lid body support shaft 44 overlap the container case 8 arranged in the inner circumference circle 20a in a side view, and a front end of the case hinge portion 46 of the container case 8 arranged in the intermediate circumference circle 20b is positioned in front of the rear end portion of the container case 8 arranged in the inner circumference circle 20a or the lid convex portion 52 of the lid body 36.

That is, the front end of the case hinge portion 46 arranged on the intermediate circumference circle 20b and the rear end portion of the container case 8 or the lid convex portion 52 of the lid body 36 arranged on the inner circumference circle 20a have a region overlapping by "OL" in a side view, and are arranged on the same radial line of the concentric circles.

By disposing the container cases 8 having such a shape around the lid body support shaft 44 close to each other in the front-rear direction, an arrangement density of the container cases 8 can be increased, and the diameter of the rotary disk 16 can be reduced to downsize the storage 11.

However, such a close arrangement is limited to a case in which the container cases 8 arranged adjacent to each other are arranged on the same line along the front-rear direction, in other words, the opening direction of the lid body 36.

Further, as shown in FIG. 10, even when the pair of container cases 8 and 8 arranged on the intermediate circumference circle 20b and the inner circumference circle 20a are arranged close to each other at a distance L1 (first radial direction interval), a dimensional relationship is such that the hook receiving portions 50 provided on the upper surface of the lid body 36 of the container case 8 arranged on the intermediate circumference circle 20b do not interfere with each other when the lid body 36 is fully opened.

In FIGS. 8 to 10, the distance between the container case 8 arranged on the intermediate circumference circle 20b and the container case 8 arranged on the outer circumference circle 20c is a distance L2 (second radial direction interval) larger than the minimum value L1. Therefore, in the container cases 8 adjacent to each other at the first radial direction interval, the lid body support shafts 44 overlap with the adjacent cases in a side view, and in the container cases 8 adjacent to each other at the second radial direction interval, the lid body support shafts 44 are arranged to form a gap with the adjacent cases in a side view. In other words, the container case 8 arranged outside a first circle (inner circumference circle 20a) and arranged on the same radial line of the concentric circle (intermediate circumference circle 20b) is arranged closer to the first circle than the circumference of a second circle (outer circumference circle 20c) .

Specifically, in the pair of container cases 8 and 8 arranged on the outer circumference circle 20c and the intermediate circumference circle 20b with the distance L2 therebetween, the lid body support shaft 44 of the container case 8 arranged on the outer circumference circle 20c, or the lid hinge portion 47 and the case hinge portion 46 constituting the lid body support shaft 44 are separated from the container case 8 arranged on the intermediate circumference circle 20b by an interval gap in a side view, and the front end of the case hinge portion 46 arranged on the outer circumference circle 20c is positioned behind the rear end portion of the container case 8 arranged on the intermediate circumference circle 20b or the lid convex portion 52 of the lid body 36. That is, a gap of "gap" is generated between the front end of the case hinge portion 46 arranged on the outer circumference circle 20c and the rear end portion of the container case 8 or the lid convex portion 52 of the lid body 36 arranged on the intermediate circumference circle 20b.

With this arrangement, the container case 8 arranged on the outer circumference circle 20c and the container case 8 arranged on the intermediate circumference circle 20b do not interfere with each other even if the container cases are not necessarily aligned in a straight line in the front-rear direction, that is, in the opening direction of the lid body 36, and thus the container case can be positioned at a position deviated in a direction of an arrow with respect to the "center line", that is, at a position deviated with respect to the intermediate circumference.

As shown in FIG. 10, the lid body 36 is implemented to be opened toward the center of the concentric circle, and in FIG. 10, a state in which the lid body 36 is fully opened toward the rear side of the container storage device 1, that is, the outer circumferential side of the rotary disk 16 is indicated by a one-dot chain line. When the lid body 36 is opened in this manner, a maximum radius of the rotary disk 16 increases from an outer diameter 55a to an outer diameter 55b. That is, the configuration in which the lid body 36 is opened forward, that is, toward the center axis of the rotary disk 16, is suitable for downsizing the rotary disk 16, that is, downsizing the storage 11.

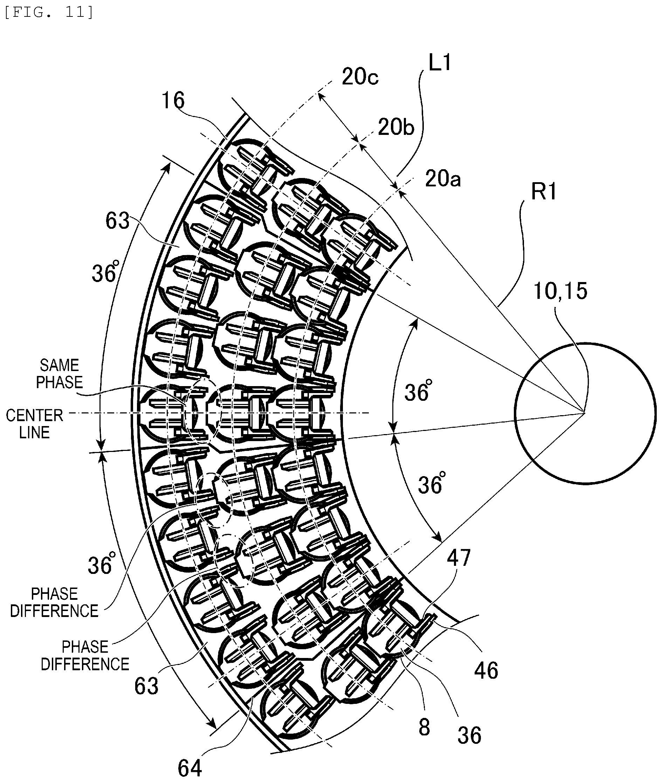

FIG. 11 shows an example in which the container cases 8, 8, and 8, having the same shape are arranged on triple concentric circles of the inner circumference circle 20a, the intermediate circumference circle 20b, and the outer circumference circle 20c. FIG. 11 is a plan view showing a part of a state in which the container cases 8 are arranged in triplicate on the rotary disk 16.

In FIG. 11, the container case 8 is arranged every 12° on the inner circumference circle 20a and the intermediate circumference circle 20b, and the container case 8 is arranged every 9° on the outer circumference circle 20c. That is, an example in which three container cases 8 are arranged in the inner circumference and the intermediate circumference and four container cases 8 are arranged in the outer circumference at intervals of 36° is shown.

On the "center line", the container cases 8, 8, and 8 arranged on the inner circumference circle 20a, the intermediate circumference circle 20b, and the outer circumference circle 20c are arranged on the straight line as in FIG. 8.

In the inner circumference circle 20a and the intermediate circumference circle 20b, the container case 8 and 8 are arranged on a circumference having a radius difference of a distance L1 which is a minimum interval. A radius R1 of the inner circumference circle 20a is obtained as a radius that allows a predetermined number N1 (integer) of the container cases 8 adjacent to each other on the circumference to be arranged at a minimum interval, for example, at equal intervals of a gap of about 1 mm, and is obtained as a circumferential length (π × R1 × 2) = (d + δ) × N1, where d is a diameter of the container case 8 and δ is an adjacent minimum gap. An arrangement radius of the intermediate circumference circle 20b is (R1 + L1), and an arrangement number of the container cases 8 and 8 in the intermediate circumference circle 20b is equal to the number of the container cases 8 and 8 arranged in the inner circumference circle 20a, and is N1.

When the radius difference between the outer circumference circle 20c and the intermediate circumference circle 20b is also L1, the arrangement radius on the outer circumference circle 20c is (R1 + 2 × L1), the arrangement number of the container cases 8 on the inner circumference circle 20a, the intermediate circumference circle 20b, and the outer circumference circle 20c is all equal, and a total number is (3 × N1).

Here, assuming that the radius difference between the intermediate circumference circle 20b and the outer circumference circle 20c is L2 (> L1), if the container case 8 arranged on the intermediate circumference circle 20b and the case hinge portion 46 of the container case 8 arranged on the outer circumference circle 20c are arranged at a distance that does not interfere with each other, the number of the container cases 8 arranged on the outer circumference circle 20c can be larger than that of the inner circumference circle 20a or the intermediate circumference circle 20b.

That is, if the arrangement radius of the outer circumference circle 20c is (R1 + L1 + L2) and the arrangement number of the container cases 8 is N2 (> N1) (integer), it is possible to dispose up to a maximum integer N2 satisfying the circumferential length {π × (R1 + L1 + L2) × 2} ≥ {(d + δ) × N2}. That is, since the outer circumference circle 20c has a large radius and thus has a large circumferential length, the arrangement number of the outer circumference circles 20c can be increased.

In this way, a first pair of concentric circles (a pair of the inner circumference circle 20a and the intermediate circumference circle 20b) which are arranged to be adjacent to each other at a first radial direction interval and in which the number of the container cases 8 that can be arranged on the circumference of each circle is the same, and a second pair of concentric circles (a pair of the intermediate circumference circle 20b and the outer circumference circle 20c) which are arranged to be adjacent to each other at a second radial direction interval wider than the first radial direction interval and in which the number of the container cases 8 that can be arranged on the circumference of each circle is different are provided, and when the number of the container cases 8 that can be arranged on the circumference of the first circle (the inner circumference circle 20a and the intermediate circumference circle 20b) among the concentric circles is defined as a first arrangement number, and the number of the container cases 8 that can be arranged on the circumference of the second circle (the outer circumference circle 20c) arranged outside the first circle among the concentric circles is defined as a second arrangement number, and the second arrangement number is larger than the first arrangement number.

In the present embodiment, the total number of container cases 8 is (2 × N1 + N2).

When the arrangement number N2 of the outer circumference circles 20c is larger than the arrangement number N1 of the intermediate circumference circles 20b in such a form, the container case 8 of the intermediate circumference circle 20b and the container case 8 of the outer circumference circle 20c are not necessarily arranged on a straight line, and may be arranged on a straight line or deviated from a straight line. Hereinafter, a case in which the container cases are arranged on a straight line may be referred to as in-phase arrangement or same-phase arrangement. In addition, a case in which the container cases are arranged deviated from a straight line may be referred to as hetero-phase arrangement.

When the inner circumference circle 20a, the intermediate circumference circle 20b, and the outer circumference circle 20c are all in hetero-phase arrangement from each other, the radius difference between the inner circumference circle 20a and the intermediate circumference circle 20b and the radius difference between the intermediate circumference circle 20b and the outer circumference circle 20c are both L2 (> L1). Since the outer circumference circle 20c is enlarged, there is a limit to downsizing of the storage 11.

That is, for example, by arranging the inner circumference circle 20a and the intermediate circumference circle 20b in the in-phase arrangement and arranging the intermediate circumference circle 20b and the outer circumference circle 20c in the hetero-phase arrangement, it is possible to increase the arrangement number of the container cases 8 while reducing an increase amount of the radius of the outer circumference circle 20c to an extent of preventing the interference of the lid hinge portion, and thus there is an effect that arrangement efficiency of the container cases 8 can be improved and the storage 11 can be downsized.

In another embodiment, the inner circumference circle 20a and the intermediate circumference circle 20b may be set in the hetero-phase arrangement such that the arrangement number of the intermediate circumference circles 20b is larger than the arrangement number of the inner circumference circles 20a, and the intermediate circumference circle 20b and the outer circumference circle 20c may be set in the in-phase arrangement such that the arrangement numbers of the intermediate circumference circles 20b and the outer circumference circles 20c are equal to each other.

Accordingly, in the triple or more concentric circle arrangement, by combining the in-phase arrangement and the hetero-phase arrangement, it is possible to achieve both the downsizing of the storage 11 and the increase in the arrangement number of container cases 8. Further, since the container cases 8, 8, and 8 having the same shape can be arranged on the inner circumference circle 20a, the intermediate circumference circle 20b, and the outer circumference circle 20c, there is an effect that production, maintenance work, or component management can be facilitated by sharing components.

A method for calculating an appropriate arrangement number of concentric circles will be described in detail later.

In double concentric circle arrangement, in the case of the in-phase arrangement, the same number of container cases 8 as the number of container cases 8 that can be arranged on the inner circumferential side are also arranged on the outer circumference, and if the container cases 8 arranged adjacent to each other on the inner circumferential side are arranged so that the gap between the container cases 8 in the circumferential direction is minimized, a position or an arrangement radius (inner circumferential radius + L1) of the container case 8 on the outer circumferential side is thereby determined, so that the dimension of the storage 11 is substantially uniquely determined.

On the other hand, if the container cases 8 are arranged in a different number, the arrangement radius of the container cases 8 on the outer circumferential side is (inner circumferential radius + L2), so that the diameter dimension of the storage 11 is larger than that in the case of the in-phase arrangement, but since a large number of container cases 8 can be arranged from the inner circumference along an arrangement circle on the outer circumference, the number of the container cases 8 that can be accommodated can be increased, and mounting efficiency can be increased to achieve a high density.

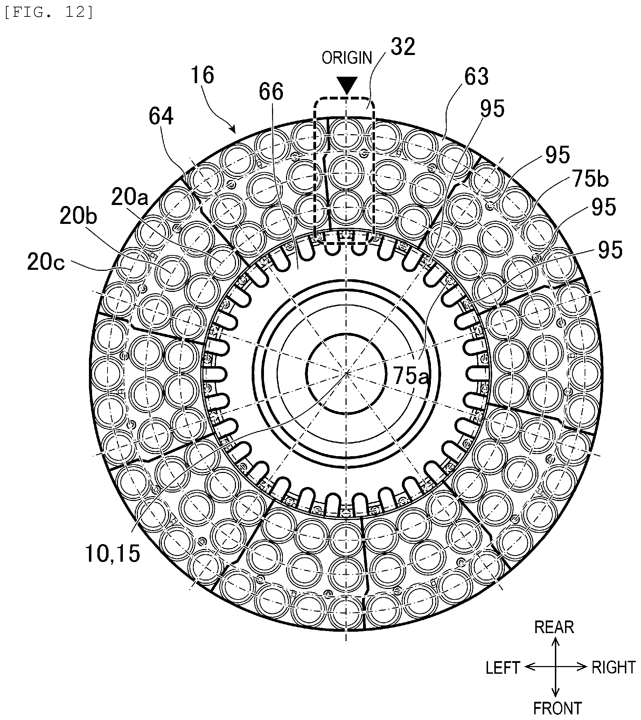

Next, a preferred example of the triple concentric circle arrangement of the container case 8 will be described with reference to FIGS. 12 and 11 as appropriate.

FIG. 12 is a plan view showing a form in which 30 container cases 8 are arranged at equal angles, that is, every 12° on each of the inner circumference circle 20a and the intermediate circumference circle 20b, and 40 container cases 8 are arranged at equal angles, that is, every 9° on the outer circumference circle 20c. The total number of the container cases 8 in the present embodiment is 100. Here, it is assumed that the radial direction facing the rear of the rotary disk 16 is an "origin" direction of the rotary disk 16, and the container cases 8 of the inner circumference circle 20a, the intermediate circumference circle 20b, and the outer circumference circle 20c are arranged on a straight line in the "origin" direction.

The container cases 8 of the inner circumference circle 20a and the intermediate circumference circle 20b are arranged at intervals of 12°, the container cases 8 on the outer circumference circle 20c are arranged every 12° and 9°, and the container cases 8 of the inner circumference circle 20a, the intermediate circumference circle 20b, and the outer circumference circle 20c are arranged on a straight line at intervals of 36°, which is a least common multiple of 9. That is, the same arrangement pattern is repeated 10 times every 36° in one circumference 360° of the rotary disk 16. Since the arrangement number of container cases 8 in one arrangement pattern is 1/10, which is the total number of the inner circumference circles 20a, the intermediate circumference circles 20b, and the outer circumference circles 20c, the number of the inner circumference circles 20a and the intermediate circumference circles 20b is three, and the number of the outer circumference circles 20c is four.

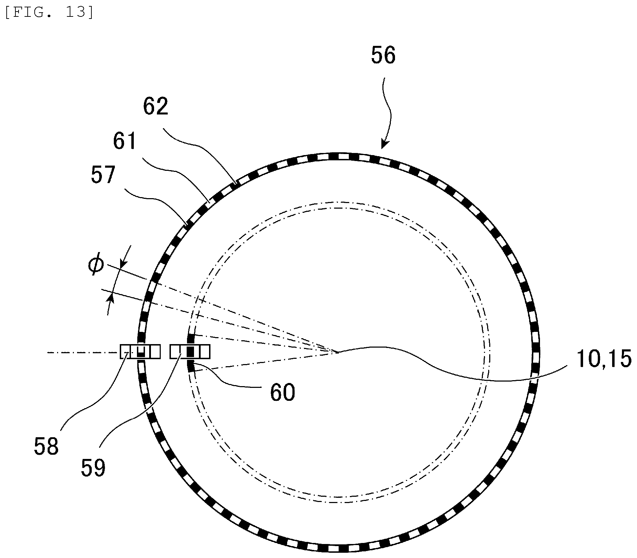

Next, the configuration of the encoder 56 that measures a rotation angle will be described with reference to FIG. 13. The encoder 56 is provided to stop the rotary disk 16 with high accuracy when the rotary disk 16 is rotated to move a predetermined container case 8 to the position of the shutter opening 32. The encoder 56 includes an encoder disk 57 formed by substantially double concentric circles, an angle detection sensor 58 which is, for example, a transmissive optical sensor corresponding to each of circumferences, and an origin detection sensor 59.

The encoder disk 57 is implemented to rotate integrally with the rotary disk 16. An origin light-shielding portion 60 is provided at only one predetermined position on an inner circumferential side of the encoder disk 57, and when the rotary disk 16 is positioned at an origin angle, the origin detection sensor 59 is shielded, and an origin angle position of the rotary disk 16 can be detected.

On the outer circumferential side of the encoder disk 57, N pairs of slits 61 and light-shielding portions 62, which are gaps in a comb shape, are alternately provided at regular angle intervals, and light transmission and light shielding are repeated as the encoder disk 57 rotates, and the number of repetitions is counted by the angle detection sensor 58 to detect the rotation angle of the rotary disk 16. In this configuration, an angle φ formed by the adjacent slits 61 is a resolution of the encoder 56.

Here, for example, when the encoder disk 57 is made of resin, there is a concern that the encoder disk 57 may be broken unless a width of the light-shielding portion 62 on the outer circumferential side in the circumferential direction has a general thickness, for example, a dimension of about 2.5 mm to 3 mm or more, and thus there is a limit to the slit number N per rotation of the encoder disk 57.

As an example, when a diameter of the encoder disk 57 is 200 mm, a circumferential length is 628 mm, when the widths of the slit 61 and the light-shielding portion 62 are equally 3 mm, the slit number per one circumference is about 104, and when the widths are 2.5 mm, a slit number N is about 125. Here, as an example, if the slit number N is 120, which is a divisor of 360°, the slits are provided every angle φ = 3°, and the value is an angular resolution of the encoder 56.

As described above, in order to ensure a strength of the light-shielding portion 62, it is desirable not to excessively reduce the angular resolution.

Since the number of the slits 61 that can be provided in one circumference of the encoder disk 57 is proportional to the circumferential length, that is, proportional to the diameter, it is necessary to increase the diameter of the encoder disk 57 in order to increase the slit number N. That is, since it is desirable to reduce the diameter of the encoder disk 57 in order to reduce the size of the storage 11, a configuration in which the slit number N is small while increasing the number of container cases 8 to be stored is most desirable.

As another embodiment, when the arrangement number of the container cases 8 in the inner circumference circle 20a, the intermediate circumference circle 20b, and the outer circumference circle 20c is equal and the container cases 8 are radially arranged in a straight line at every predetermined angle, the slit number N is small because the slits 61 of the encoder 56 may be provided one by one corresponding to the predetermined angle. For example, assuming that the arrangement number of the container cases 8 in each of the inner circumference circle 20a, the intermediate circumference circle 20b, and the outer circumference circle 20c is 30 and the container cases 8 are arranged every 12°, and the total number of container cases 8 is 90, 30 slits may be provided every 12°. However, since the circumferential length of the outer circumference circle 20c is long, a gap between the container cases 8 in the outer circumference circle 20c in the circumferential direction becomes large, and a useless space increases, so that there is a limit to downsizing of the storage 11 and improvement of storage efficiency.

In the present embodiment, 30 inner circumference circles 20a and 30 intermediate circumference circles 20b are arranged every 12°, and 40 outer circumference circles 20c are arranged every 9°. Since the greatest common divisor of 12° and 9° is 3°, if the resolution of the encoder 56 is 3°, the angle positions corresponding to all the container cases 8 can be detected by the encoder 56. That is, it is possible to move a predetermined container case 8 to the position of the shutter opening 32 and attach and detach the QC specimen container 4 in the container case 8 by the container gripping device 33.

The slit number N of the encoder 56 is 120, which is the least common multiple of the he numbers of container cases 30 and 40 arranged on the circumference, and the resolution of the encoder at this time is 360/120 = 3°.

As described above, in the present embodiment, the container cases 8 of the inner circumference circle 20a, the intermediate circumference circle 20b, and the outer circumference circle 20c are arranged in a straight line every 36°. If the encoder disk 57 is arranged so that the angle detection sensor 58 exactly detects the position of the rotary disk 16 and the rotary disk 16 is positioned and stopped when the container cases 8 are aligned in a straight line along the shutter opening 32, the three container cases 8 can be positioned at the same time only by the angle detection sensor 58 detecting one of the slits 61. In this respect, it is efficient and is effective in reducing the slit number N of the encoder 56.

When the origin is detected, the container case 8 having the inner circumference circle 20a, the intermediate circumference circle 20b, and the outer circumference circle 20c is preferably arranged on a straight line in the shutter opening 32. That is, since it is possible to confirm the opening and closing operation of the lid body 36 by the lid opening and closing device 35 with respect to the container case 8 of the inner circumference circle 20a, the intermediate circumference circle 20b, and the outer circumference circle 20c and confirm the attachment and detachment operation of the QC specimen container 4 by the container gripping device 33 without rotating the rotary disk 16 at the origin position, there is an effect that an initialization operation or an operation confirmation at the time of daily power supply can be performed in a short time.

Here, as an example, when the container cases 8 are arranged in double or triple concentric circles, a relationship between the arrangement number of the containers on each of the circumferences and the angular resolution of the encoder 56 will be described using the case of triple concentric circles as an example.

As described above, it is desirable to have a combination of the arrangement number that allows the slit number N of the encoder 56 to be reduced. The slit number N of the encoder 56 is the least common multiple of the arrangement number of the containers on each triple circumference. That is, it is desirable to use a combination of arrangement numbers that can reduce the least common multiple of the arrangement numbers on each circumference. It goes without saying that such a combination of arrangement numbers has a common prime factor for each of the arrangement numbers, and the smaller the prime factor itself is, the smaller the least common multiple will be.

Here, when the arrangement number is formed with only the minimum prime factor 2, the arrangement number at the time of the different number arrangement is twice the arrangement number on the outer circumferential side than the inner circumferential side. For example, the arrangement number becomes 16, 16, 32 or 32, 32, 64 from the inside. In this case, since the arrangement number N differs by half between the inner circumference and the outer circumference, the outer circumference circle 20c is significantly larger than the inner circumference circle 20a and the intermediate circumference circle 20b, so that the storage 11 is large and there is a limit to downsizing.

In other words, since the arrangement number N of the inner circumference circle 20a and the intermediate circumference circle 20b is only 1/2, which is the arrangement number of the outer circumference circle 20c, the gap on the circumference between the container cases 8 arranged on the inner circumferential side is large, and the total number of the container cases 8 to be stored is smaller than the arrangement radius, which is not efficient.

Although the slit number N of the encoder 56 is small because it is equal to the arrangement number of the outer circumference circles 20c, there is a problem that the total number of the container cases 8 to be stored is small, which is not suitable for downsizing the storage 11 and is not efficient.

For this reason, it is preferable that the prime factor is not only 2, but is based on a monotonically increasing numerical sequence in which the prime factor is only 2 and 3.

As described above, using a numerical sequence a(n) including only 2 and 3 as the prime factors and in which the same value continuously increases two by two, a plurality of continuous values of the numerical sequence a(n) are associated from the inner circumference in ascending order. By multiplying these values by a constant coefficient K, the arrangement number of the container cases 8 and the resolution of the encoder 56 are determined. Since the numerical sequence a(n) including the prime factors of only 2 and 3, the increase in a least common multiple LCM can be minimized even if n increases, and as a result, the resolution of the encoder 56 can be prevented from becoming excessively small.

In the triple or more concentric circles, the same number arrangement and the different number arrangement alternately occur on the adjacent circumferences.

To generalize this, M and K are integers, and an arrangement number of the container cases 8 arranged on the M concentric circles is defined as an arrangement number of the M concentrically container cases 8, the number being obtained by multiplying, by K, each of M consecutive numerical values including mutually different numerical values in a numerical sequence a(n) in which a same numerical value is monotonically increased two by two with only 2 and 3 as prime factors, the container cases 8 are arranged on the circumference sequentially from an inner circumference in ascending order of the numerical values.

In the present embodiment, a suitable arrangement of the container case 8 including the QC specimen container 4 therein and including the lid body 36 on the upper surface is described, and the container to be placed on the circular ring holder 9 is not limited to the container case 8, and may be a bottomed container including a lid body having the same structure as described above on the upper surface and including a liquid such as a specimen or a reagent therein. Alternatively, the lid body 36 may not be provided.

Further, not all of the container cases 8 may be the same, and for example, the container cases 8 or the containers arranged on the inner circumference and the outer circumference may have different shapes.

In the example shown in FIG. 12 in which the arrangement number of the container cases 8 is 30/30/40 from the inner circumference, that is, 100 in total, the same arrangement pattern is repeated 10 times at intervals of 36° in one circumference 360° of the rotary disk 16 as described above.

Therefore, the circular ring holder 9 for holding the container case 8 on the rotary disk 16 is not an integral part but a holder member 63 obtained by dividing the circular ring holder 9 into 10 substantially fan shapes at every angle 36°, and each holder member 63 can hold 10 container cases 8.

As described above, the circular ring holder 9 is installed in each of the regions formed by dividing the circumference of the rotary disk 16 by the integer N by providing the boundary to intersect the circumference, and in this case, it is desirable that each of the regions is formed by dividing the circumference of the rotary disk 16 into the integer N equal parts from the rotation axis toward the outer circumferential side.

A boundary 64 between the adjacent holder members 63 preferably has a shape connecting between the container cases 8 adjacent to each other in the inner circumference circle 20a and the intermediate circumference circle 20b and between the container cases 8 adjacent to each other in the outer circumference circle 20c.

Each of the holder members 63 is provided with 10 arrangement holes for holding 10 container cases 8. The arrangement of the 10 arrangement holes is in a concentric circle, and the inner circumference circle 20a and the intermediate circumference circle 20b are three at intervals of 12°, and the outer circumference circle 20c is four at intervals of 9°. The holes of the inner circumference circle 20a, the intermediate circumference circle 20b, and the outer circumference circle 20c are provided in a set in the holder member 63 to be aligned in a straight line on the radius of the concentric circles.

Alternatively, the circumference 360° can also be formed by the holder member 63 divided into five substantially fan shapes at every angle 72° by repeating the arrangement pattern twice. In this case, each of the holder members 63 holds 20 container cases.

When the holder member 63 is formed in a fan shape as such an embodiment, since each of the holder member 63 can be made smaller than the integral circular ring holder 9, there is an effect that, particularly when the holder member 63 is formed of a resin, shrinkage, deformation, and the like during molding are small, and component accuracy is easily obtained. Further, if the respective holder members 63 are components having the same shape, the components can be shared, so that various advantages can be obtained in terms of manufacturing, which is more preferable.

When the boundary 64 between the adjacent holder members 63 has a gap of, for example, about 0.5 mm and has a shape without a portion overlapping in the up-down direction, only one holder member 63 can be independently attached to and detached from the rotary disk 16.

Therefore, when the holder member 63 needs to be replaced for some reason, the holder member 63 can be replaced without affecting other holder members 63, so that the maintenance work can be facilitated and the work can be completed in a short time.

Further, the container case 8 can be implemented to be attachable to and detachable from the circular ring holder 9 in a state of holding an arrangement space thereof, and can be implemented to be attachable to and detachable from the circular ring holder 9 independently of other container cases 8.

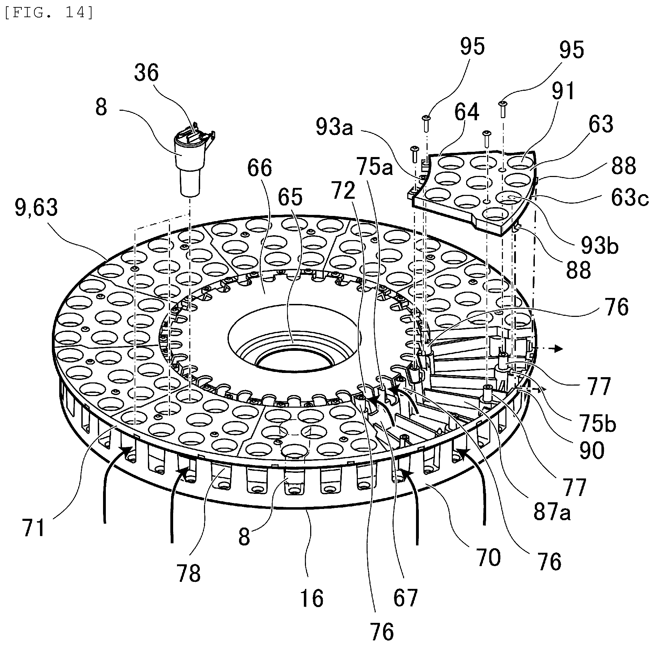

Next, configurations of the holder member 63 and the rotary disk 16 will be described with reference to FIGS. 14 to 17 and 8 to 12 as appropriate.

FIG. 14 is an exploded perspective view showing a configuration of the rotary disk 16 and a configuration for fastening the holder member 63 to the rotary disk 16. A configuration of a screw or a snap fit for fixing the container case 8 to the holder member 63 is omitted for convenience of illustration.

In the present embodiment, the holder member 63 is a holder member 63 divided into 10 substantially fan shapes at every angle of 36°, and each of the holder members 63 holds 10 container cases 8. The container case 8 is implemented such that the QC specimen container 4 held therein can be attached to and detached from the container case 8 in the up-down direction by the container gripping device 33, and when the QC specimen container 4 is attached and detached, the QC specimen container 4 is attached and detached against a frictional force between the sealing member 43 provided in the container case 8 and the QC specimen container 4. Therefore, it is necessary to achieve both sufficient rigidity for attachment of the holder member 63 and high accuracy so that the QC specimen container 4 can be reliably gripped by the container gripping device 33 so that the position of the container case 8 is not deviated or inclined due to the frictional force when the QC specimen container 4 is attached or detached.

The rotary disk 16 has an innermost mounting surface 65 in the most inner circumferential side fastened to the upper surface of the disk drive shaft 17 by a screw (not shown), and is implemented to rotate together with the disk drive shaft 17 by transmitting a rotational torque of the drive motor 18 to the disk drive shaft 17 via the timing belt 19 while reducing a speed of the rotational torque. A lower end portion of the disk drive shaft 17 is a disk-shaped encoder disk 57, and includes a pair of the slit 61 and the light-shielding portion 62, and the origin light-shielding portion 60 as shown in FIG. 13.

Since the outer circumferential side of the mounting surface 65 forms a columnar portion 66 that rises in a columnar shape from the mounting surface 65 and has a thickness in the up-down direction, the configuration has high rigidity and can ensure strength.

A further outer circumferential side of the columnar portion 66 extends downward in a columnar shape, and serves as an inner cylindrical wall surface 67 forming an inner wall surface of a region for accommodating the container case 8 on the inner circumferential side.

Further, it further includes a bottom disk portion 68 having a circular ring shape connected to the lower side of the inner cylindrical wall surface 67, a disk outer circumference cylindrical wall surface 70 rising in a columnar shape upward from the outer circumference of the bottom disk portion 68 and forming an outer wall surface of a region for accommodating the container case 8 on the outer circumferential side, and an outer circumferential flange portion 71 provided above the disk outer circumference cylindrical wall surface 70 with a larger diameter than the disk outer circumference cylindrical wall surface 70 and extending upward.

An opening is provided between the container cases 8 adjacent to each other on the inner circumferential side from the inner cylindrical wall surface 67 to the upper surface of the columnar portion 66 to form a rotary disk intake port 72 for aspirating cooling air for cooling the inside of the storage toward the inside of the rotary disk 16.

The inner cylindrical wall surface 67 further has cylindrical positioning pins 75a extending upward between the adjacent rotary disk intake ports 72, the number of which corresponds to the number of the holder members 63, for use in positioning the holder member 63, and an inner circumferential screw boss 76 for fastening the holder member 63 with a screw is provided in a portion which is between the adjacent rotary disk intake ports 72 and in which the positioning pins 75a are not provided.

In the present embodiment, since there are three container cases 8 arranged on the inner circumference of one holder member 63, the inner circumferential screw bosses 76 are provided at two positions with the positioning pin 75a interposed therebetween. As described above, in each of the regions formed by each of the holder members 63 constituting the circular ring holder 9, the holder members 63 are fixed to the rotary disk 16 at a plurality of first positions (the inner circumferential screw bosses 76 and screws 95) on the innermost circumferential side.

Although the case in which there are two first positions (the inner circumferential screw boss 76 and the screw 95) is described, the number of first positions may be one or three or more, and is not particularly limited.

Since the positioning pin 75a and the inner circumferential screw boss 76 are provided along the inner cylindrical wall surface 67 having high rigidity, positioning accuracy is high and rigidity is also high.

Between the intermediate circumference circle 20b and the outer circumference circle 20c, two outer circumferential screw bosses 77 and 77 are provided for each of the holder members 63 in a gap portion between the container cases 8 arranged on the intermediate circumference circle 20b and the outer circumference circle 20c. The outer circumferential screw boss 77 is erected on the bottom disk portion 68 of the rotary disk 16 and has a height capable of fixing the holder member 63. As an example, an upper surface of the outer circumferential screw boss 77 may have the same height as an upper surface of the inner circumferential screw boss 76. The inner circumferential screw boss 76 and the outer circumferential screw boss 77 are provided with female screws that can be screwed downward.

As described above, in each of the regions formed by each of the holder members 63 constituting the circular ring holder 9, the holder members 63 are fixed to the rotary disk 16 not only at the first positions but also at a plurality of second positions (the outer circumferential screw bosses 77 and the screws 95)) on the outer circumferential side of the first position.

Preferred arrangement positions of these outer circumferential screw bosses 77 and 77 will be described later.

Although the case in which there are two second positions (the outer circumferential screw boss 77 and the screw 95) is described, the number of the second positions may also be one or three or more, similar to the first positions, and is not particularly limited.

However, it is desirable to have two first and/or second positions, since it is desirable from the viewpoint of manufacturability and maintainability to firmly fix the components without increasing the number of screw fastening positions.

The disk outer circumference cylindrical wall surface 70 is provided with an opening corresponding to the container case 8 arranged on the outer circumference, and serves as a rotary disk dispensing port 78 for dispensing cooling air for cooling the inside of the storage 11 from the outside toward the inside of the rotary disk 16.

A positioning pin 75b paired with the positioning pin 75a is provided between the outer circumference of the rotary disk 16 and the container case 8 arranged on the outer circumference circle 20c, and is used for positioning the holder member 63.

In the outer circumferential flange portion 71, for example, two claw receiving holes 90 into which hook claw portions 88, which are protrusions provided from an outer circumference of holder member 63c toward the outer circumference, are inserted are provided for the holder member 63.

Ribs 87a are implanted radially upward from the upper surface of the bottom disk portion 68, and an inner circumferential side of the ribs 87a is in contact with the inner cylindrical wall surface 67.

Further, the ribs 87b may be implanted radially downward from the lower surface of the bottom disk portion 68.

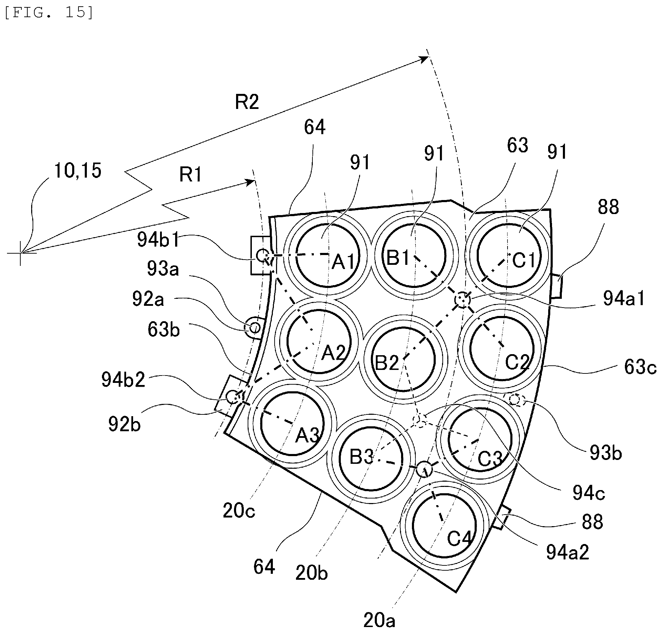

The shape of the holder member 63 will be described with reference to the cross-sectional views in FIGS. 15 and 9.

FIG. 15 is a plan view of the holder member 63, in which the holder member 63 has a substantially 36° fan shape obtained by dividing the circumference of the circular ring holder 9 by 10, and the inner circumferential side thereof is an arc-shaped inner circumference of holder member 63b and the outer circumferential side thereof is an arc-shaped outer circumference of holder member 63c. The holder member 63 may be formed of, for example, a polyacetal (PO) resin.

In the present embodiment, the holder member 63 is provided with 10 case holding holes 91 for holding the container case 8 to penetrate in the up-down direction. The inner circumference circle 20a is provided with three of A1 and A2, A3 at 12° intervals, the intermediate circumference circle 20b is provided with three of B1, B2, and B3 at 12° intervals, and the outer circumference circle 20c is provided with four of C1, C2, C3, and C4 at 9° intervals. Here, A1, B1, and C1 are arranged in a straight line on the radius of a concentric circle with the support shaft 15 which is the center axis of the rotary disk 16. An interval between the inner circumference circle 20a and the intermediate circumference circle 20b, that is, an interval between A1 and B1 is L1 shown in FIG. 8, and an interval between the intermediate circumference circle 20b and the outer circumference circle 20c, that is, an interval between B1 and C1 is L2.

Further, the holder member 63 is provided with three plate-shaped tongue-shaped portions 92a and 92b in total, which protrude further toward the inner circumferential side from the inner circumference circle 20a, which corresponds to the innermost circumferential side of the substantially fan-shaped holder member 63. A positioning pin receiving hole 93a corresponding to the positioning pin 75a provided on the rotary disk 16 is provided in the tongue-shaped portion 92a at the center adjacent to A2 in the case holding hole 91. A diameter of the positioning pin receiving hole 93a is slightly larger than the diameter of the positioning pin 75a, so that the holder member 63 is not prevented from being attached to and detached from the rotary disk 16 from above, and necessary attachment accuracy is obtained when the holder member 63 is attached to the rotary disk 16.

Screw holes 94b1 and 94b2 corresponding to the inner circumferential screw boss 76 and 76 are provided in the tongue-shaped portions 92b and 92b of the case holding hole 91 adjacent to A1 and A3 and protruding from the inner circumference of holder member 63b toward the center axis, and is implemented to be fastened to the rotary disk 16 by the screw 95. The inner circumferential screw bosses 76 and 76 and the screw holes 94b1 and 94b2 are arranged on a circumference of the radius R1 (which may be referred to as a "first radius") from a rotation center axis of the rotary disk 16.

A positioning pin receiving hole 93b is provided at a position corresponding to the positioning pin 75b in the lower surface of the case holding hole 91 arranged in the outer circumference circle 20c, which is close to the rotary disk 16 between C2 and C3. The positioning pin receiving hole 93b has an oval hole shape having a longitudinal direction in a direction facing the support shaft 15, and a width of an oval hole is slightly larger than the diameter of the positioning pin 75b, so that the holder member 63 is not prevented from being attached to and detached from the rotary disk 16 from above, and necessary attachment accuracy is obtained when the holder member 63 is attached to the rotary disk 16. Since the positioning pin receiving hole 93b has an oval hole shape, even when there is an error between the distance between the positioning pin 75a and the positioning pin 75b in the rotary disk 16 and the distance between the positioning pin receiving hole 93a and the positioning pin receiving hole 93b in the holder member 63, it is possible to reliably perform fitting.

That is, by fitting the positioning pin 75a into the positioning pin receiving hole 93a and the positioning pin 75b into the positioning pin receiving hole 93b, the holder member 63 can be accurately positioned with respect to the rotary disk 16. Further, since the positioning pin receiving hole 93a is provided along the inner cylindrical wall surface 67 of the rotary disk 16, the positioning accuracy is high and the strength is also high, so that the holder member 63 can be positioned with high accuracy.

In a region surrounded by B1, B2 of the intermediate circumference case holding holes 91 and C1, C2 of the outer circumference case holding holes 91, and in a region surrounded by B3 of the intermediate circumference case holding holes 91 and C3, C4 of the outer circumference case holding holes 91, the screw holes 94a1 and 94a2 are provided at positions corresponding to the outer circumferential screw bosses 77 and 77 provided on the rotary disk 16, so that the holder member 63 can be fixed by screw fastening. The outer circumferential screw bosses 77 and 77 and the screw hole 94a1 and 94a2 are arranged on a circumference of a radius R2 (which may be referred to as a "second radius") from the rotation center axis of the rotary disk 16. Here, (second radius) > (first radius).

Here, a suitable arrangement of the positions of the screw hole 94a1 and 94a2 and the screw holes 94b1 and 94b2 will be described.

When the holder member 63 is fastened with a screw, it is desirable that all the case holding holes 91 are firmly fixed. Therefore, it is preferable to provide a screw hole adjacent to the case holding hole 91, and it is preferable to eliminate an opening portion such as another hole or a narrow portion having low strength between the case holding hole 91 and the screw hole.

The screw hole 94b1 provided on the inner circumferential side of the holder member 63 is arranged adjacent to the A1 and A2 of the case holding hole 91 without any other hole or narrow portion between the screw hole 94b1 and the case holding hole 91. Similarly, the screw hole 94b2 is arranged adjacent to the A2 and A3 of the case holding hole 91 without any other hole or narrow portion between the screw hole 94b2 and the case holding hole 91.

Since the screw hole 94a1 corresponding to the outer circumferential screw boss 77 and 77 is provided in a region surrounded by B1 and B2 of the case holding hole 91 on the intermediate circumference and C1 and C2 of the case holding hole 91 on the outer circumference, the screw hole 94a1 is arranged adjacent to B1, B2, C1 and C2 of the case holding hole 91.

Since the screw hole 94a2 is provided in a region surrounded by C3, C4 of the case holding hole 91 on the outer circumference and B3 of the case holding hole 91 on the intermediate circumference, the screw hole 94a2 is arranged adjacent to B3, C3, C4 of the case holding hole 91.

That is, all of the seven B1, B2, B3, C1, C2, C3, and C4 provided on the intermediate circumference and the outer circumference of the case holding hole 91 are adjacent to any one of the screw holes 94a1, 94a2, and all of the container cases 8 can be firmly and accurately fixed to the rotary disk 16 via the holder member 63, which is preferable.

As an example of a different screw hole position, a case in which a screw hole is provided at a screw hole alternative position 94c will be described.

In this case, B2 and B3 of the case holding hole 91 on the intermediate circumference and C3 of the case holding hole 91 on the outer circumference are adjacent to the screw hole alternative position 94c, and a narrow portion between B3 and C3 of the case holding hole 91 is interposed between C4 of the case holding hole 91 and the screw hole alternative position 94c, so that there is room for improvement in strength. In addition, since a distance between the screw hole alternative position 94c and C4 of the case holding hole 91 is larger than a distance between the screw hole 94a and C4 of the case holding hole 91, even if the screw 95 is fastened at the screw hole alternative position 94c, there is room for more reliably inhibiting floating of C4 of the case holding hole 91.

Compared with this example, the effect of selecting a position adjacent to the case holding hole 91 in the holder member 63 and providing and fastening the screw holes 94a1 and 94a2 is clear, and it is possible to improve a fixing strength and accuracy of the container case 8 via the holder member 63, which is preferable.

As a further example of the screw hole position, it is conceivable to set the first position to two positions including a position evenly spaced from A1, A2, B1, and B2 in the case holding hole 91 and a position evenly spaced from A2, A3, B2, and B3 in the case holding hole 91, and to set the second position to two positions in the vicinity of the hook claw portion 88.

As described above, the inner circumferential side of the holder member 63 is fastened to the rotary disk 16 at two positions of the inner circumferential screw boss 76 having the "first radius", and the outer circumferential side is fastened to the rotary disk 16 at two positions of the outer circumferential screw boss 77 having the "second radius". The outer circumferential screw boss 77 has a cantilever column structure erected from the bottom disk portion 68 of the rotary disk 16, but is firmly fixed to the inner circumferential screw boss 76 via the holder member 63 by fastening the upper end thereof to the holder member 63. Further, since the upper ends of the two outer circumferential screw bosses 77 are fastened to the same holder member 63, the rotary disk 16 and the holder member 63 have a configuration with a high rigidity similar to a so-called rigid-frame structure via the screws at a total of four locations, and the container case 8 can be held with high accuracy. That is, there is an effect of obtaining a highly reliable rotary disk structure which is hard to deform and easy to maintain its dimensional accuracy.

The screw holes 94a1 and 94a2 on the outer circumferential side are positioned on the inner circumferential side of the container case 8 arranged on the outer circumference circle 20c. Therefore, a plurality of claw-shaped hook claw portions 88 protruding toward the outer circumferential side are further arranged on the outer circumference of holder member 63c positioned on the outer circumferential side of the container case 8, a claw receiving hole 90 which is a hole into which the hook claw portion 88 can be fitted is provided in the outer circumferential flange portion 71 provided on the outermost circumference of the rotary disk 16, and when the holder member 63 is set at a predetermined position on the rotary disk 16, the hook claw portion 88 is fitted into the claw receiving hole 90 to prevent the outer circumference of holder member 63c from floating upward with respect to the rotary disk 16.

With such a configuration, the holder member 63 can be more firmly fixed to the rotary disk 16 together with the fastening by the screw, and in particular, there is an effect that sufficient rigidity for preventing deformation or deflection against a force in the up-down direction when the QC specimen container 4 is attached to and detached from the inside of the container case 8 via the container gripping device 33 can be obtained.

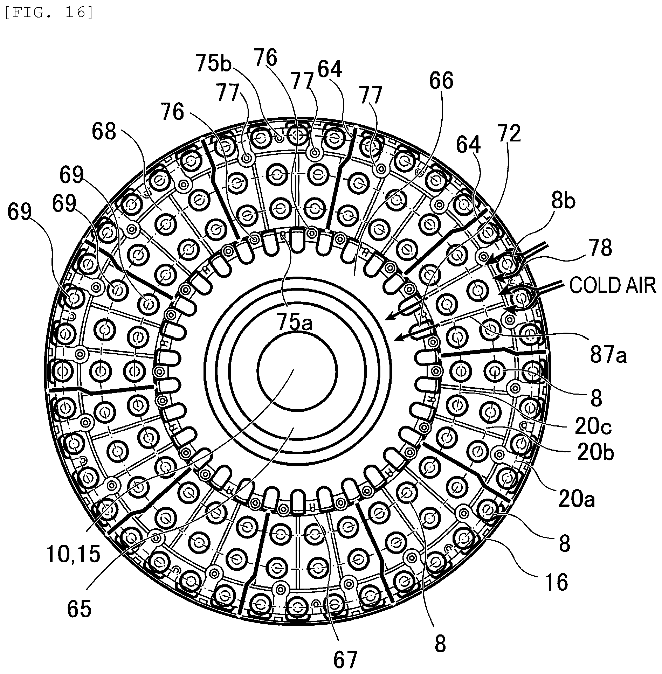

Next, the flow of cooling air inside the storage 11 and the cooling of the container case 8 and the QC specimen container 4 by the cooling device 14 will be described with reference to FIGS. 16 to 20, 3, and 14 as appropriate.

FIG. 16 is a plan view of the rotary disk 16, in which the boundary 64 of the holder member 63 and an arrangement of the second tubular portion 8b (second diameter) which is a cylindrical small diameter portion protruding downward from the holder member 63 in the container case 8 in the storage 11 are additionally shown.

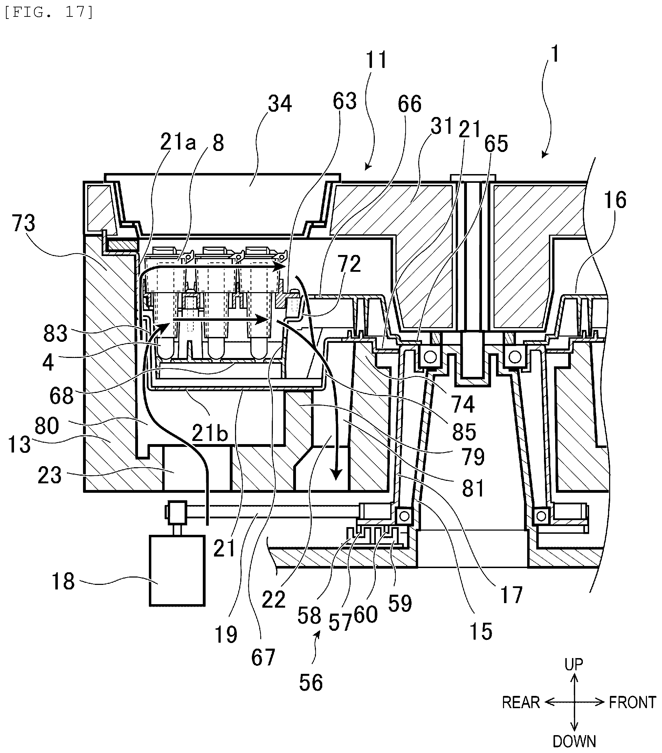

FIG. 17 is a partially enlarged view of the A-A cross-sectional view of the container storage device similar to FIG. 3, in which the cold air dispensing port 23 and the cold air intake port 22 are shown in a direction opposite to that in FIG. 3 with respect to the rotation center axis of the storage 11 for the sake of description, and the action is similar.

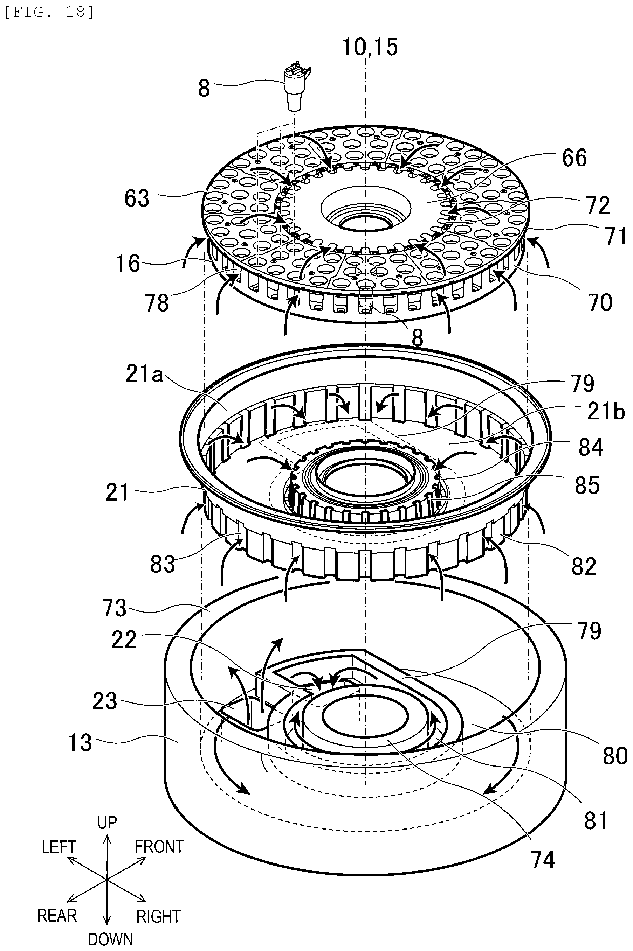

FIG. 18 is an exploded perspective view showing the heat insulating member 13 of the storage 11, the rotary disk 16, the fixing disk 21 provided between the heat insulating member 13 and the rotary disk 16, and the flow of cold air.

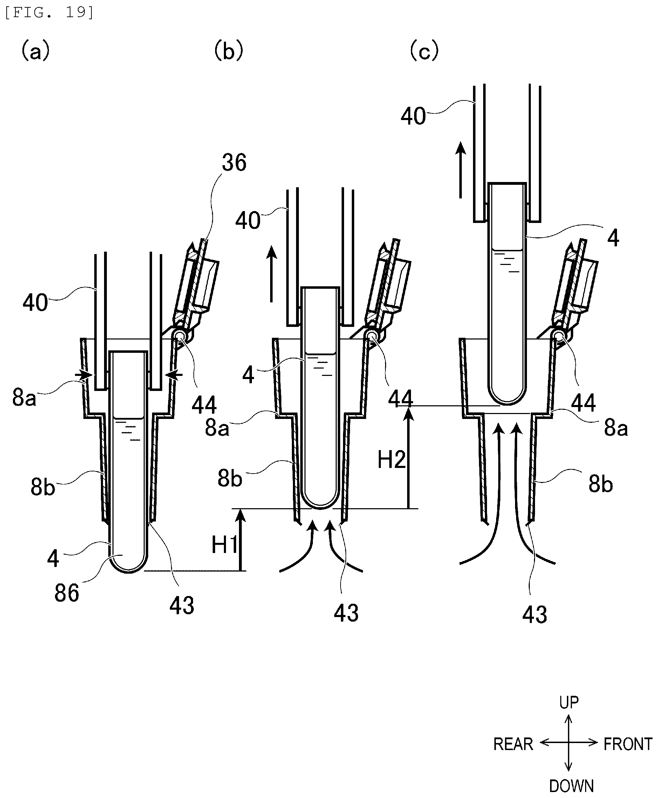

FIG. 19 is a cross-sectional view showing the flow of cold air when the QC specimen container 4 is removed in the vertical direction upward from the container case 8.

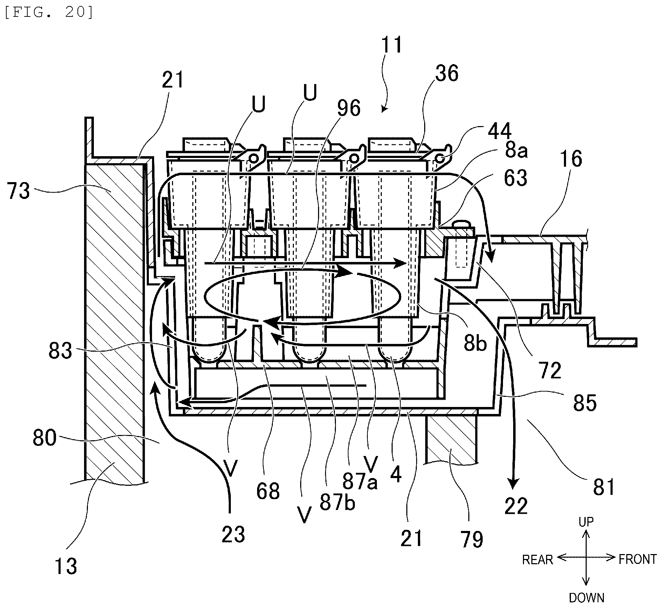

FIG. 20 is a longitudinal cross-sectional view showing the flow of cold air when the rotary disk 16 rotates.

First, a flow of cold air in a state in which the rotary disk 16 is stopped will be described.

As shown in FIG. 3, in the cooling device 14, the cold air cooled by the cooling element 26 is blown into an internal space of the storage 11 from the dispensing port 23 provided in the vertical direction below the circular ring holder 9 in the storage 11 and arranged on the outer circumferential side of the circumference of the rotary disk 16, and is aspirated from the intake port 22 provided on the inner circumferential side arranged on the inner circumferential side of the circumference of the rotary disk 16 in the storage 11, so that a circulation flow flowing from the outer circumferential side to the inner circumferential side in the storage 11 is generated.

As shown in FIG. 18, the heat insulating member 13 has a substantially cylindrical shape, and the outer circumferential side thereof extends in the vertical direction upward to form an outer circumferential fixing portion 73 that supports an outer circumferential portion of the fixing disk 21. An inner circumferential side of the heating insulating member extends in the vertical direction upward to form an inner circumferential fixing portion 74 that supports an inner circumferential portion of the fixing disk 21. Further, on the outer circumference of the inner circumferential fixing portion 74, a separation wall 79 is provided as a partition wall having an upper surface in contact with a bottom surface of the fixing disk 21 and including the intake port 22 in a region between the inner circumferential fixing portion 74. The dispensing port 23 is provided in a region between the separation wall 79 and the outer circumferential fixing portion 73, that is, outside a region between the inner circumferential fixing portion 74 and the separation wall 79.

Since the cold air is dispensed from the dispensing port 23 into the inside of the heat insulating member 13, a region on the outer circumferential side of the separation wall 79 becomes a positive pressure portion 80 maintained at a positive pressure higher than an atmospheric pressure. Since the cold air is aspirated from the intake port 22, the region on the inner circumferential side of the separation wall 79 becomes a negative pressure portion 81 lower than the atmospheric pressure.

Since the outside of the separation wall 79 of the fixing disk 21 is kept at a positive pressure, the cold air flows into the fixing disk 21 from a dispensing opening 83 which is an opening provided in a fixing disk outer circumferential portion 82. Due to the presence of the dispensing opening 83, a vertical direction lower side of the second tubular portion 8b of the container case 8 and a vertical direction lower side of the circular ring holder 9 are opened.

Since the inner side of the fixing disk 21 with respect to the separation wall 79 is maintained at a negative pressure, the cold air flowing into the fixing disk 21 from the dispensing opening 83 is aspirated from the intake opening 85 which is an opening provided in the side surface of a fixing disk columnar portion 84 which is provided in a range of the inner circumference with respect to the separation wall 79 of the fixing disk 21 and protrudes in a columnar shape.

The cold air flowing into the fixing disk 21 from the dispensing opening 83, which is an opening provided in the fixing disk outer circumferential portion 82, flows into the rotary disk 16 from the rotary disk dispensing port 78, which is an opening provided in the outer circumferential portion of the rotary disk 16, and cools the container case 8.

As shown in FIG. 16, since the container case 8 of the outer circumference circle 20c is provided immediately inside the rotary disk dispensing port 78 on the outer circumference of the rotary disk 16, the cold air flowing in from the rotary disk dispensing port 78 flows along the container case 8 of the outer circumference circle 20c and flows into the rotary disk 16.

The cold air that cools the container case 8 is aspirated from the rotary disk intake port 72 provided in the columnar portion 66 on the inner circumferential side of the rotary disk 16, passes through the intake opening 85 provided in the inner circumferential portion of the fixing disk 21, and is aspirated from the intake port 22 provided in the heat insulating member 13.

That is, the cold air cools the surface of the container case 8 while flowing from the outer circumferential side toward the inner circumferential side.

Since the cold air flows from the outer circumferential side toward the inner circumferential side of the rotary disk 16 while cooling the container case 8, a temperature slightly increases toward the inner circumferential side corresponding to a downstream side. Meanwhile, since the inside of the rotary disk 16 is a cylindrical space and a circumferential length of the inner circumference is shorter than a circumferential length of the outer circumference, it is clear from the law of mass conservation that the cold air flowing from the outer circumference to the inner circumference of the rotary disk 16 accelerates in the radial direction and flows while increasing a flow velocity. Since a heat transfer coefficient increases as a flow velocity of the surface of the inner circumference increases, the heat transfer coefficient increases even when the temperature of the cold air slightly increases as the temperature of the inner circumference increases, so that it is possible to implement the storage 11 having a small temperature difference of the container case 8 due to an arrangement position of the inner and outer circumferences, that is, a uniform cooling capacity with a small inner and outer circumference difference.

Here, as shown in FIG. 17, a part of the cold air flowing into the rotary disk 16 from the dispensing opening 83 provided in the outer circumference of the fixing disk 21 flows into an upper portion of the holder member 63 through a narrow gap between an inner wall of the outer circumference cylindrical portion 21a of the fixing disk 21 and the outer circumference of the rotary disk 16.

Meanwhile, most of the cold air flows along the container case 8 on the outer circumferential side through the dispensing opening 83 of the fixing disk 21 and flows in a region below the holder member 63.

The region above the holder member 63 is a first region where the container case 8 has a large diameter (first diameter d1), and as is clear from the plan view shown in FIG. 11, the gap between the container cases 8 is small, and therefore, the flow path through which the cold air flows is narrow, and the flow rate of the cold air is low because a flow path resistance is large.

The region below the holder member 63 is a second region where the diameter of the container case 8 is small (second diameter d2), and as shown in FIG. 16, since the gap between the container cases 8 is large, the flow path through which the cold air flows is wide, and the flow rate of the cold air is large because the flow path resistance is small.

After cooling the container case 8, the cold air divided into the upper and lower portions of the holder member 63 returns to the cooling device 14 from the intake port 22 of the heat insulating member 13 via the rotary disk intake port 72 provided on the inner circumferential side of the rotary disk 16 and the intake opening 85 provided in the fixing disk 21.

Here, as shown in FIG. 9, the liquid 86 such as a QC specimen sample is stored in the QC specimen container 4 held in the container case 8. If a maximum liquid surface height of the liquid 86 is, for example, about the same as that of the holder member 63, the range of the liquid 86 is substantially a second region corresponding to the small diameter portion of the container case 8. Since the distance between an outer side surface of the QC specimen container 4 and an inner surface of the container case 8 is, for example, about 1 mm, the heat transfer coefficient between an outer surface of the container case 8 and a surface of the liquid 86 on a container inner surface is large, so that a temperature difference is unlikely to occur, and the liquid 86 can be efficiently cooled. In this way, by preferentially flowing a large amount of cold air to the region below the holder member 63, the liquid 86 can be cooled more efficiently.

Further, the QC specimen container 4 is implemented to be supported by the sealing member 43 provided in the second tubular portion 8b which is the lower end of the container case 8, and the second tubular portion 8b which is the lower end of the container case 8 and the region of the QC specimen container 4 below the sealing member 43 are implemented to be exposed to the space in the rotary disk 16. That is, since the liquid 86 in the QC specimen container 4 basically positioned in a region below the sealing member 43 in the QC specimen container 4 is directly cooled by the cold air supplied from the cooling device 14 together with the second tubular portion 8b exposed from the circular ring holder 9, a temperature difference between the cold air and the liquid 86 hardly occurs. Therefore, the liquid 86 in the QC specimen container 4 can be efficiently cooled, the temperature difference between the cold air and the liquid 86 hardly occurs, and there is an effect that the liquid 86 is reliably cooled and suitable for long-term storage.

Next, a flow of cold air when the QC specimen container 4 is taken out upward from the container case 8 by the gripping claw 40 of the container gripping device 33 will be described with reference to FIG. 19.

As described above, the cylindrical side surface of the QC specimen container 4 is held while maintaining airtightness by the sealing member 43 having a circular ring shape at the lower end of the container case 8.

Here, the container gripping device 33 is controlled by the control device 6 to take out the QC specimen container 4 from the container case 8 by moving the QC specimen container 4 to above the sealing member 43 while gripping the QC specimen container 4 held in the container case 8.

(a) of FIG. 19 shows a state in which the gripping claw 40 is lowered into a large-diameter portion of the container case 8 to grip the QC specimen container 4, (b) of FIG. 19 shows a state in which the gripping claw 40 is raised to move the QC specimen container 4 upward by H1 and the bottom portion of the QC specimen container 4 moves above the sealing member 43, and (c) of FIG. 19 shows a state in which the gripping claw 40 is further raised to move the QC specimen container 4 upward by H1 and the bottom portion of the QC specimen container 4 moves further above the stepped portion of the container case 8.

When the QC specimen container 4 is moved upward by H1 from the state shown in (a) of FIG. 19 to the state shown in (b) of FIG. 19, the side surface of the QC specimen container 4 moves above the sealing member 43, so that the QC specimen container 4 acts like a piston, and cold air in the vicinity of the bottom surface of the rotary disk 16 flows into the container case 8 from the sealing member 43. When the QC specimen container 4 is further raised to reach the state of (c) of FIG. 19, the small diameter portion of the container case 8 is substantially filled with the cold air in the vicinity of the bottom surface of the rotary disk 16.

This phenomenon is remarkable because an inner diameter of the second region of the container case 8 is substantially equal to the outer diameter of the QC specimen container 4 and the gap is small, and the air in the container case 8 after the QC specimen container 4 is taken out is filled with cold air in the vicinity of the bottom surface having a lowest temperature among the air in the rotary disk 16. When the lid body 36 is closed using the lid opening and closing device 35 after the QC specimen container 4 is taken out, the air once flowing into the container case 8 substantially remains in the container case 8, so that a temperature increase can be prevented.

When the QC specimen container 4 is returned into the container case 8, if the lid body 36 is opened by using the lid opening and closing device 35 again, and the lid body 36 is closed by using the lid opening and closing device 35 again after the QC specimen container 4 is inserted by the container gripping device 33, the inside of the container case 8 is filled with cold air, and the liquid 86 in the QC specimen container 4 can be maintained at a low temperature by preventing a temperature increase, so that it is suitable for long-term storage of a specimen and is preferable.

Next, a cold air flow when the rotary disk 16 is rotated will be described. The bottom disk portion 68 of the rotary disk 16 is provided with radial ribs 87a and 87b.

The ribs 87a are provided radially from the center axis on the side of the bottom disk portion 68 of the rotary disk 16 where the circular ring holder 9 and the like are present, and the ribs 87b are provided radially from the center axis on the side of the bottom disk portion 68 of the rotary disk 16 where the fixing disk 21 and the like are present. With this configuration, the ribs 87a and 87b act as a so-called centrifugal fan, and when the rotary disk 16 is rotated, the cold air in the vicinity of the bottom disk portion 68 flows from the inner circumference toward the outer circumference along the ribs 87a and 87b as indicated by an arrow V by a centrifugal force.

As described above, since the cold air from the cooling device 14 is a positive pressure on the outer circumferential side than the separation wall 79, the cold air flow as indicated by an arrow U flowing from the outer circumference to the inner circumference is always present regardless of rotation or stop of the rotary disk 16.

On the other hand, as the rotary disk 16 rotates, an additional cold air flow is generated in the vicinity of the bottom disk portion 68, conversely flowing from the inner circumference to the outer circumference, and the positive pressure on the outer circumferential side further increases.

As a result, the cold air flow in the space between the bottom disk portion 68 and the holder member 63 is a cold air flow flowing from the outer circumference to the inner circumference in the vicinity of the holder member 63 on the upper surface, whereas the cold air flow in the space in the vicinity of the bottom disk portion 68 is in the opposite direction, from the inner circumference to the outer circumference. Therefore, a cold air vortex 96 as shown in FIG. 20 is generated in the cross section in the radial direction to stir the cold air in the space between the bottom disk portion 68 and the holder member 63. Therefore, there is an effect that a temperature distribution of the cold air in the rotary disk 16 is made uniform and temperature unevenness is reduced. Further, since the cold air in the vicinity of the bottom surface directly cools the QC specimen container 4 exposed from the lower end of the container case 8, the cold air acts suitably for cooling the QC specimen container 4 and the liquid in the container.

Further, since the container case 8 rotationally moves together with the rotary disk 16 via the holder member 63, a vortex is generated on the downstream side of each of the container cases 8 to further stir the cold air. As the cold air moves vigorously relative to the container case 8, a temperature boundary layer on a surface of the container case 8 becomes thinner, further reducing a temperature difference between the cold air temperature and the temperature of the surface of the container case 8, thereby accelerating cooling of the container case 8 and further improving cooling of the QC specimen container 4 in the container case 8 and the liquid 86 in the QC specimen container 4.

As described above, of the air dispensed from the dispensing port 23, an amount of the air flowing in the vertical direction below the circular ring holder 9 is larger than the amount of the air flowing in the vertical direction above the circular ring holder 9 by setting the outer circumferential side of the rotary disk 16 to the positive pressure and the inner circumferential side to the negative pressure by the cooling device 14, the cold air flow from the outer circumference to the inner circumference is steadily generated in the rotary disk 16, and on the other hand, when the rotary disk 16 rotates, the flow from the inner circumference to the outer circumference in the opposite direction is generated in the vicinity of the bottom surface of the rotary disk 16 by the effects of the ribs 87a and 87b radially arranged, so that the effect of equalizing an internal temperature by the effect of the flow of the cold air vortex 96 can be obtained by intermittently rotating and stopping the rotary disk 16.

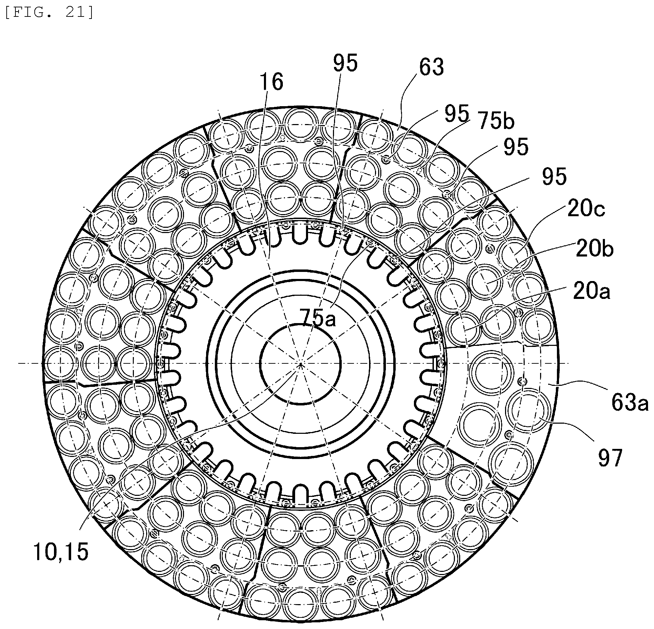

Another embodiment will be described with reference to FIG. 21. FIG. 21 is a plan view showing a state in which the holder members 63 divided into a fan shape for each angle 36° are arranged in a circular ring shape and fastened with screws as in FIG. 12. A difference from the embodiment is that not all the holder members 63 have the same shape, and second holder members 63a capable of holding second container cases 97 having a large diameter are provided in a mixed manner. In the example of FIG. 21, only one second holder member 63a is provided, but the number of second holder members 63a is not limited to one, and a plurality of second holder members 63a may be provided. Alternatively, a third holder member capable of holding a third container case having a different diameter may be further provided.

With such a configuration, there is an effect that the container cases 8 accommodating the QC specimen containers 4 having different dimensions can be mixed and stored in the storage 11, a plurality of types of QC specimen samples can be stored, and the storage 11 having large expandability can be provided.

Next, effects of the present embodiment will be described.

The container storage device 1 according to the above-described embodiment includes: the container case 8 configured to hold the QC specimen container 4 that accommodates a liquid; the circular ring holder 9 configured to allow a plurality of container cases 8 to be arranged; and the rotary disk 16 configured to hold a plurality of the circular ring holders 9 on a circumference thereof and to be rotatable about a rotation axis. The container case 8 includes an opening 8c configured to be capable of inserting and removing the QC specimen container 4 and the lid body 36 configured to be capable of opening and closing the opening 8c, the holder member 63 constituting the circular ring holder 9 is installed in each of regions formed by dividing the circumference of the rotary disk 16 by an integer N by providing a boundary so as to intersect with the circumference, and the holder member 63 is fixed in at least a first position and a second position on an outer circumferential side of the first position in each of the regions.

As described above, since the holder member 63 constituting the circular ring holder 9 that holds the container case 8 is fastened to the rotary disk 16 by screws or the like at least at two or more positions at different positions in the circumferential direction, support rigidity and accuracy of the container case 8 by the holder member 63 can be improved. In addition, since the holder member 63 can be used as a reinforcing structural member for the rotary disk 16, the rigidity of the rotary disk 16 is improved compared to a structure in the related art, making it possible to provide a highly reliable storage.

Since each of the regions is formed by dividing the circumference of the rotary disk 16 into an integer number N of equal parts from the rotation axis toward the outer circumferential side, since the holder members 63 are of the same shape, it is fairly easy to evenly arrange the container cases 8, and the manufacture of the holder members 63 and the work of fixing the holder members to the rotary disk 16 are made easier.

Further, by arranging the container cases 8 along a plurality of circumferences centered on the rotation axis, the arrangement number of the container cases 8 can be further increased.

Since the container cases 8 are arranged concentrically along a plurality of circumferences centered on the rotation axis, the container cases 8 can be evenly provided on the circular ring holder 9, thereby preventing uneven arrangement of the container cases 8. Therefore, a risk of a center of gravity of the rotary disk 16 being deviated from the rotation axis can be further reduced, and reliability can be further improved.

Further, since the number of container cases 8 held on the outermost circumference is greater than the number of container cases 8 held on the innermost circumference, the arrangement number of the container cases 8 to be arranged can be increased without significantly increasing the diameter of the storage 11, and the container cases can be efficiently arranged with high density.

Since there are a plurality of first positions and are provided on the innermost circumferential side, and there are a plurality of second positions and are provided at equal distances from the adjacent circular ring holders 9, the holder member 63 and the rotary disk 16 can be firmly fixed in a position where there is room in a space for fastening work or installation.

Further, by providing the positioning pins 75a and 75b, positioning accuracy of the holder member 63 can be further improved.

### <Others>

The invention is not limited to the above-described embodiments, and includes various modifications. For example, the above-described embodiments have been described in detail to facilitate understanding of the invention, and the invention is not necessarily limited to those including all the configurations described above. A part of a configuration according to a certain embodiment can be replaced with a configuration according to another embodiment, and a configuration according to another embodiment can be added to a configuration according to a certain embodiment. In addition, another configuration can be added to a part of a configuration of each embodiment, and the part of the configuration of each embodiment can be deleted or replaced with another configuration.

### Reference Signs List

1: container storage device (container storage)
2: automatic analyzer
3: analyzer (analysis unit)
4: QC specimen container (container)
5: pretreatment device
6: control device (control unit)
7: first conveyance path
8: container case
8a: first tubular portion (first region)
8b: second tubular portion (first region)
8c: opening (opening portion)
9: circular ring holder (holder)
10: storage center shaft
11: storage
12: housing
13: heat insulating member (jacket)
14: cooling device
15: support shaft
16: rotary disk (holder holding disk)
17: disk drive shaft
18: drive motor
19: timing belt
20a: inner circumference circle
20b: intermediate circumference circle
20c: outer circumference circle
21: fixing disk
21a: outer circumference cylindrical portion
21b: disk portion
22: intake port (cooling device)
23: dispensing port (cooling device)
24: cold air duct
25a, 25b: cold air blowing fan (cooling device)
26: cooling element (cooling device, cold air generation portion)
27: cooling fin
28: heat dissipation fin
29: heat dissipation fan
30: exhaust port
31: drum upper lid
32: shutter opening
33: container gripping device (container gripping mechanism)
34: shutter
35: lid opening and closing device
36: lid body (lid portion)
37: opening and closing arm
38: support rod portion
39: opening and closing hook
40: opening and closing claw (gripping claw)
41: second conveyance path
42: stepped portion
43: sealing member
44: lid body support shaft (lid support shaft)
45: sealing material
46: case hinge portion
47: lid hinge portion
48: locking surface
49: locking protrusion
50: hook receiving portion
51: hook receiving portion end portion
52: lid convex portion
53: lid groove
54: lid groove upper surface
55a, 55b: outer diameter
56: encoder
57: encoder disk
58: angle detection sensor
59: origin detection sensor
60: origin light-shielding portion
61: slit
62: light-shielding portion
63: holder member
63a: second holder member
63b: inner circumference of holder member
63c: outer circumference of holder member
64: boundary
65: mounting surface
66: columnar portion
67: inner cylindrical wall surface
68: bottom disk portion
69: holding hole
70: disk outer circumference cylindrical wall surface
71: outer circumferential flange portion
72: rotary disk intake port
73: outer circumferential fixing portion
74: inner circumferential fixing portion
75a, 75b: positioning pin (positioning member)
76: inner circumferential screw boss
77: outer circumferential screw boss
78: rotary disk dispensing port
79: separation wall
80: positive pressure portion
81: negative pressure portion
82: fixing disk outer circumferential portion
83: dispensing opening
84: fixing disk columnar portion
85: intake opening
86: liquid
87a, 87b: rib
88: hooking claw portion
90: claw receiving hole
91: case holding hole
92a, 92b: tongue-shaped portion
93a, 93b: positioning pin receiving hole
94a1, 94a2, 94b1, 94b2: screw hole
94c: screw hole alternative position
95: screw
96: cold air vortex
97: second container case

## Claims

1. A container storage comprising:
a container case configured to hold a container that accommodates a liquid;
a holder configured to allow a plurality of container cases to be arranged; and
a holder holding disk configured to hold a plurality of the holders on a circumference thereof and to be rotatable about a rotation axis, wherein
the container case includes an opening portion configured to be capable of inserting and removing the container and a lid portion configured to be capable of opening and closing the opening portion,
the holder is installed in each of regions formed by dividing the circumference of the holder holding disk by an integer N by providing a boundary so as to intersect with the circumference, and
the holder is fixed in at least a first position and a second position on an outer circumferential side of the first position in each of the regions.

2. The container storage according to claim 1, wherein
each of the regions is formed by dividing the circumference of the holder holding disk into the equal integer N parts from a rotation axis toward the outer circumferential side.

3. The container storage according to claim 1, wherein
the container cases are arranged along a plurality of circumferences around the rotation axis.

4. The container storage according to claim 3, wherein
the container cases are arranged concentrically along the plurality of circumferences around the rotation axis.

5. The container storage according to claim 3, wherein
the number of the container cases held on the circumference at an outermost circumferential side is larger than the number of the container cases held on the circumference at an innermost circumferential side.

6. The container storage according to claim 1, wherein
a plurality of the first positions are provided on an innermost circumferential side.

7. The container storage according to claim 1, wherein
a plurality of the second positions are provided at positions at equal distances from the adjacent holders.

8. The container storage according to claim 1, wherein
the holder further includes a positioning member with respect to the holder holding disk.

9. An automatic analyzer comprising:
the container storage according to claim 1; and
an analysis unit configured to perform analysis using the liquid accommodated in the container.

10. A container storage method performed in a container storage including a container case including an opening portion configured to be capable of inserting and removing a container that accommodates a liquid and a lid portion configured to be capable of opening and closing the opening portion, a holder configured to allow a plurality of container cases to be arranged, and a holder holding disk configured to hold a plurality of the holders on a circumference thereof and to be rotatable about a rotation axis, the method comprising:
installing the holders in each of regions formed by dividing the circumference of the holder holding disk by an integer N by providing a boundary so as to intersect with the circumference; and
fixing the holder in at least a first position and a second position on an outer circumferential side of the first position in each of the regions.
